# EUROPÄISCHE PATENTSCHRIFT

(11) **EP 2 172 525 B1**
(45) Veröffentlichungstag und Bekanntmachung des Hinweises auf die Patenterteilung: **23.03.2011**
(21) Anmeldenummer: 09170555.8
(22) Anmeldetag: 17.09.2009
(51) Int. Cl.: C08L 101/10, C08L 71/02, C08L 33/08

(54) **Vernetzbare Massen auf der Basis von Organosiliciumverbindungen**
Crosslinkable materials based on organosilicon compounds
Masses réticlulables à base de composés organosiliciés

(30) Priorität: 06.10.2008 DE 102008042632
(43) Veröffentlichungstag der Anmeldung: 07.04.2010
(73) Patentinhaber: Wacker Chemie AG, 81737 München (DE)
(72) Erfinder: Prasse, Marko, 01612 Glaubitz (DE)
(74) Vertreter: Budczinski, Angelika

(56) Entgegenhaltungen:
- EP-A- 1 765 928
- EP-A- 1 873 208
- EP-A- 2 031 024

## Beschreibung

Die Erfindung betrifft unter Ausschluss von Wasser lagerfähige, bei Zutritt von Wasser bei Raumtemperatur zu Elastomeren vernetzbare Massen auf der Basis von Organosiliciumverbindungen, welche Oxaldianilide und Siliciumverbindungen mit basischem Stickstoff aufweisen, Verfahren zu deren Herstellung sowie daraus hergestellte Formkörper.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen.

Insbesondere in transparenten Massen ist es schwierig farblose Produkte mit gleichzeitig guter Haftung auf Untergründen, wie Plasten oder Metallen, herzustellen. So werden in US-B2 7,211,616 und US-A1 2003/0153671 Benzotriazole als UV-Absorber und Aminosilane als Zusatz beschrieben. Solche Massen verfärben jedoch leicht bzw. sind schon nach der Herstellung gelb. In EP-A1 1873208 werden Benzophenole, Benzotriazole, Salicylate, substituierte Tolylverbindungen und Metallchelate als UV-Absorber erwähnt, bevorzugt werden keine Aminosilane zugegeben. Solche Massen haben den Nachteil, dass nur eine unzureichende Haftung auf Plasten und Metallen erzielt wird. Wird ein Aminosilan zugegeben, so treten spätestens während der Lagerung der Massen Verfärbungen auf.

Oxaldianilide als solche sind bereits seit langem bekannt und werden als UV-Schutzmittel in wäßrigen Polyurethandispersionen, wässrigem Polycarbamid, Vinylpolymeren, wie Polyacrylnitril, Polystyrol, Polyvinylacetat, Polyvinylchlorid oder Polyvinylmethacrylat eingesetzt.

Gegenstand der Erfindung sind vernetzbare Massen enthaltend
(A) Verbindungen der Formel

   A- [(CR¹₂)_{b}-SiRₐ(OR²)₃₋ₐ]ₓ (I),

   wobei
   A einen x-wertigen, über Stickstoff, Phosphor, Sauerstoff, Schwefel, Kohlenstoff oder Carbonylgruppe gebundenen Polymerrest bedeutet,
   R gleich oder verschieden sein kann und einen einwertigen, gegebenenfalls substituierten Kohlenwasserstoffrest darstellt, R¹ gleich oder verschieden sein kann und ein Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   R² gleich oder verschieden sein kann und ein Wasserstoffatom oder einen einwertigen, gegebenenfalls substituierten Kohlenwasserstoffrest darstellt,
   x eine ganze Zahl von 1 bis 10, bevorzugt 1, 2 oder 3, besonders bevorzugt 1 oder 2, ist,
   a 0, 1 oder 2, bevorzugt 0 oder 1, ist und
   b eine ganze Zahl von 1 bis 10, bevorzugt 1, 2, 3 oder 4, besonders bevorzugt 1, 2 oder 3, ist,
(B) basischen Stickstoff aufweisende Organosiliciumverbindung und
(C) Oxaldianilid der Formel

   R³-NH-C(=O)-C(=O) -NH-R³ (II),

   wobei
   R³ gleich oder verschieden sein kann und einen einwertigen, gegebenenfalls substituierten Phenylrest darstellt.

Bevorzugt haben die Verbindungen (A) der Formel (I) ein Molekulargewicht von 2 000 g/mol bis 100 000 g/mol, besonders bevorzugt von 5 000 g/mol bis 50 000 g/mol, jeweils angegeben als Zahlenmittel.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest, und der 2-Methoxyethylrest, der 2-Methoxypropylrest sowie der 2-(2-Methoxyethoxy)ethylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Bei Rest A handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane;Polyester; Polyamide; Polyacrylate; Polymetacrylate; Vinylpolymer und Polycarbonate enthalten und die über -O-C(=O)-NH-, -NH-C(=O)O-, -NH-C(=O)-NH-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'-, -CR'₂-, -P(=O)(OR')₂-, -O-CH₂-C(OH)H-CH₂-NR'-, -O-CH₂-C(OH)H-CH₂-S-, -O-CH₂-C(OH)H-CH₂-C(=O)-, -O-CH₂-C(OH)H-CH₂-O-, 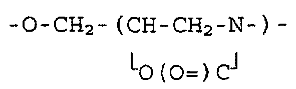 oder 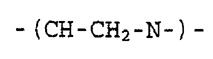 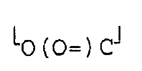 an die Gruppe -[(CR¹₂) _{b}-SiRₐ (OR²) ₃₋ₐ] gebunden sind, wobei R' gleich oder verschieden sein kann und ein Wasserstoffatom darstellt oder eine für R angegebene Bedeutung hat.
Besonders bevorzugt handelt es sich bei Rest A um Polyoxyalkylen- und Polyacrylatreste, insbesondere um Polyoxyalkylenreste, die über -O-C(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- oder -O-CH₂-C(OH)H-CH₂-O- an die Gruppe -[(CR¹₂)_{b}-SiRₐ(OR²)₃₋ₐ] gebunden sind, wobei R' gleich oder verschieden sein kann und ein Wasserstoffatom darstellt oder eine für R angegebene Bedeutung hat.

Falls es sich bei Rest A um Polyoxyalkylenreste A1 handelt, so enthalten diese bevorzugt Wiederholungseinheiten der Formel

-R⁷-O- (III),

wobei
R⁷ gleich oder verschieden sein kann und einen gegebenenfalls substituierten zweiwertigen Kohlenwasserstoffrest mit 1 bis 12 Kohlenstoffatomen, der linear oder verzweigt sein kann, bedeutet.

Die Polyoxyalkylenreste A1 enthalten bevorzugt mindestens 50%, besonders bevorzugt mindestens 70%, Wiederholungseinheiten der Formel (III), jeweils bezogen auf die Gesamtzahl der Wiederholungseinheiten.

Zusätzlich zu den Wiederholungseinheiten der Formel (III) können die Reste A1 noch weitere Einheiten, wie z.B. Amid-, Harnstoff-, Urethan-, Thiourethan-, Alkylen-, Arylen-, Ester-, Carbonat-, Imid- oder Imin-Einheiten, enthalten.

Beispiele für Rest R⁷ sind -CH₂-, -CH₂-CH₂-, -CH₂-CH(CH₃)-, -CH₂-CH₂-CH₂-, -CH₂-CH(-CH₂-CH₃)-, -CH(CH₃)-CH(CH₃)-_{,} -CH₂-CH₂-CH₂-CH₂- und -CH₂-C(CH₃)₂-.

Bevorzugt handelt es sich bei Rest R⁷ um einen zweiwertigen, gegebenenfalls substituierten Kohlenwasserstoffrest mit 1 bis 4 Kohlenstoffatomen, besonders bevorzugt um einen zweiwertigen Kohlenwasserstoffrest mit 1 bis 4 Kohlenstoffatomen, ganz besonders bevorzugt um -CH₂-CH₂- und -CH₂-CH(CH₃)-, insbesondere um -CH₂-CH(CH₃)-.

Handelt es sich bei Rest A um Polyacrylatreste A2, so enthalten diese bevorzugt Wiederholungseinheiten der Formel

-CH₂-C(R⁸)(COOR⁹) -, (IV)

wobei
R⁸ gleich oder verschieden sein kann und Wasserstoffatom oder Methylrest bedeutet und
R⁹ gleich oder verschieden sein kann und gegebenenfalls substituierte, einwertige Kohlenwasserstoffreste bedeutet.

Die Reste A2 enthalten bevorzugt mindestens 50%, besonders bevorzugt mindestens 70%, Wiederholungseinheiten der Formel (IV), jeweils bezogen auf die Gesamtzahl der Wiederholungseinheiten.

Zusätzlich zu den Wiederholungseinheiten der Formel (IV) können die Reste A2 noch weitere Gruppen enthalten, wie z.B. Styrol-, Perfluorethylen-, Maleinsäure- oder deren Mono- oder Diester- oder Abkömmlinge davon, wie Maleimide, Fumarsäure- oder deren Mono- oder Diester-, Nitril-, Vinylester-, wie Vinylacetat- oder Vinyllaurat-, Alken-, wie Ethylen-, Propylen- oder Octylen-, konjungierte Dien-, wie Butadiene- oder Isopren-, Vinylchlorid-, Vinylenchlorid-, Allylchlorid- oder Allylalkohol-Einheiten. Dem in der Polymerchemie üblichen Sprachgebrauch folgend werden diese Einheiten zum Teil nach den im Polymerisationsverfahren eingesetzten Monomeren benannt, was dem Fachmann bekannt ist.

Beispiele für Rest R⁹ sind die für Rest R angegebenen Beispiele.

Bevorzugt handelt es sich bei Rest R⁹ um gegebenenfalls substituierte Kohlenwasserstoffreste mit 1 bis 30 Kohlenstoffatomen, besonders bevorzugt mit 1 bis 20 Kohlenstoffatomen.

Beispiele für die Wiederholungseinheit nach Formel (IV) sind: -CH₂-C(CH₃)(COOCH₃)-, -CH₂-C(CH₃)(COOCH₂CH₃)-, -CH₂-C(CH₃)(COOCH₂CH₂CH₃)-, -CH₂-C(CH₃)(COOCH₂CH₂CH₂CH₃)-, -CH₂-C(CH₃) (COOCH(CH₃)₂)-, -CH₂-C(CH₃)(COO(CH₂)₄CH₃)-, -CH₂-C(CH₃)(COO(CH₂) ₅CH₃) -, -CH₂-C (CH₃)(COO-CycloHexyl)-, -CH₂-C(CH₃) (COO(CH₂)₆CH₃) -, -CH₂-C(CH₃)(COO(CH₂)₇CH₃)-, -CH₂-C(CH₃)(COOCH₂CH(CH₂CH₃)CH₂CH₂CH₂CH₃)-, -CH₂-C(CH₃)(COOCH₂CH(CH₃)CH₂C(CH₃)₃) -, -CH₂-C(CH₃)(COO(CH₂)₈CH₃)-, -CH₂-C(CH₃)(COO(CH₂)₉CH₃) -, -CH₂-C(CH₃)(COO(CH₂)₁₁CH₃)-, -CH₂-C(CH₃)(COO(CH₂)₁₃CH₃)-, -CH₂-C(CH₃)(COO(CH₂)₁₅CH₃) -, -CH₂-C(CH₃)(COO (CH₂)₁₇CH₃)-, -CH₂-C(CH₃)(COOPh) -, -CH₂-C(CH₃)(COO(CH₂Ph))-, -CH₂-C(CH₃)(COOCH₂CH₂OCH₃)-, -CH₂-C(CH₃)(COOCH₂CH₂OH) -, -CH₂-C(CH₃)(COOCH₂CH₂CH(OCH₃)CH₃)-, -CH₂-C(CH₃)(COOCH₂CH(OH)CH₃) -, -CH₂-C (CH₃)(COO-Glycidyl)-, -CH₂-C(CH₃)(COO-CH₂CH₂CH₂Si(OCH₃)₃)-, -CH₂-C(CH₃)(COO-CH₂CH₂CH₂Si(OCH₃)₂CH₃)-, -CH₂-C(CH₃)(COO-(CH₂CH₂O)ₓH)-, -CH₂-C(CH₃)(COOCF₃)-, -CH₂-C (CH₃)(COOCH₂CH₂CF₃) - und -CH₂-C(CH₃)(COOCH₂CH₂CF₂CF₃)-; sowie -CH₂-C(H)(COOCH₃)-,-CH₂-C(H)(COOCH₂CH₃)-, -CH₂-C(H)(COOCH₂CH₂CH₃)-, -CH₂-C(H)(COOCH₂CH₂CH₂CH₃)-, -CH₂-C(H)(COOCH(CH₃)₂)-, -CH₂-C(H)(COOCH₂CH(CH₃)₂)-, -CH₂-C(H)(COOC(CH₃)₃)-, -CH₂-C(H)(COO(CH₂)₄CH₃) -, -CH₂-C(H)(COO(CH₂)₅CH₃)-, -CH₂-C(CH₃)(COOCH₂CH₂OCH₃)-, -CH₂-C(CH₃)(COOCH₂CH₂OCH₂CH₃)-, -CH₂-C(CH₃)(COOCH₂CH₂CH(OCH₃)CH₃) - und -CH₂-C (H) (COOCH₂CH (CH₂CH₃) CH₂CH₂CH₂CH₃)- mit Ph gleich Phenylrest, CycloHexyl gleich Cyclohexylrest und Glycidyl gleich Glycidylrest und x' gleich einer Zahl von 1 bis 10.

Besonders bevorzugt sind als Wiederholungseinheiten der Formel (IV) -CH₂-C(CH₃)(COOCH₃)-, -CH₂-C(CH₃)(COOCH₂CH₃)-, -CH₂-C(CH₃)(COOCH₂CH₂CH₃)-, -CH₂-C(CH₃)(COOCH₂CH₂CH₂CH₃)-, -CH₂-C(CH₃)(COOCH(CH₃)₂)-,-CH₂-C(CH₃)(COO (CH₂)₄CH₃)-, -CH₂-C(CH₃)(COO(CH₂)₅CH₃)-, -CH₂-C(CH₃)(COO-CycloHexyl)-, -CH₂-C(CH₃)(COO(CH₂)₆CH₃)-, -CH₂-C (CH₃)(COO(CH₂)₇CH₃)-, -CH₂-C(CH₃)(COOCH₂CH(CH₂CH₃)CH₂CH₂CH₂CH₃)-, -CH₂-C(CH₃)(COOCH₂CH(CH₃)CH₂C (CH₃)₃)-, -CH₂-C(CH₃) (COO(CH₂)₈CH₃)-, -CH₂-C(CH₃)(COO(CH₂)₉CH₃)-, -CH₂-C(CH₃)(COO(CH₂)₁₁CH₃)-, -CH₂-C(CH₃) (COO(CH₂)₁₃CH₃)-, -CH₂-C (CH₃) (COO(CH₂)₁₅CH₃)-, - CH₂-C(CH₃)(COO(CH₂)₁₇CH₃)-, -CH₂-C(CH₃)(COOCH₂CH₂OCH₃)- und -CH₂-C(CH₃)(COOCH₂CH₂CH(OCH₃)CH₃)-; sowie -CH₂-C(H)(COOCH₃)-, -CH₂-C(H)(COOCH₂CH₃)-, -CH₂-C(H)(COOCH₂CH₂CH₃)-, -CH₂-C(H)(COOCH₂CH₂CH₂CH₃)-, -CH₂-C(H)(COOCH(CH₃)₂)-, -CH₂-C(H)(COOCH₂CH(CH₃)₂)-, -CH₂-C(H)(COOC(CH₃)₃)-, -CH₂-C(H)(COO(CH₂)₄CH₃)-, -CH₂-C(H)(COO(CH₂)₅CH₃)-, -CH₂-C(CH₃)(COOCH₂CH₂OCH₃)-, - CH₂-C(CH₃)(COOCH₂CH₂OCH₂CH₃)-, -CH₂-C(CH₃)(COOCH₂CH₂CH(OCH₃)CH₃) - und -CH₂-C(H)(COOCH₂CH(CH₂CH₃)CH₂CH₂CH₂CH₃)- mit CycloHexyl gleich Cyclohexylrest.

Bevorzugt enthalten die Reste A, besonders bevorzugt die Polyoxyalkylenreste Al, Einheiten der Formel

-NR¹⁰-C(=O)- (V),

wobei
R¹⁰ gleich oder verschieden sein kann und Wasserstoffatom oder gegebenenfalls substituierten, einwertigen Kohlenwasserstoffrest bedeutet.

Beispiele für Rest R¹⁰ sind Wasserstoffatom und die für Rest R angegebenen Beispiele.

Bevorzugt handelt es sich bei Rest R¹⁰ um Wasserstoffatom oder gegebenenfalls substituierte Kohlenwasserstoffreste mit 1 bis 12 Kohlenstoffatomen, besonders bevorzugt Wasserstoffatom oder Kohlenwasserstoffreste mit 1 bis 6 Kohlenstoffatomen.

Beispiele für Rest R² sind Wasserstoffatom oder die für Rest R angegebenen Beispiele.

Bevorzugt handelt es sich bei Rest R² um Wasserstoffatom oder Alkylreste mit 1 bis 12 Kohlenstoffatomen, besonders bevorzugt um Alkylreste mit 1 bis 4 Kohlenstoffatomen, insbesondere um den Methyl- und Ethylrest.

Beispiele für Komponente (A) sind Tris-(Organyloxy)silylalkyl-gruppen oder Bis-(Organyloxy)-methyl-silylalkylgruppen aufweisende organische Polymere, wie Polyacrylate, Vinylpolymere, Polyurethane und Polyglykole, die linear oder verzweigt sein können. Die Herstellung dieser Polymere kann durch bekannte Verfahren erfolgen, wie Additionsreaktionen, wie z.B. der Hydrosilylierung, Michael-Addition, Diels-Alder-Addition, der Addition von Isocyanat an Epoxide oder an aktiven Wasserstoff aufweisende reaktive Gruppen, wie Amine, Amide, Hydroxyl- oder Mercaptogruppen, der Addition von Epoxiden an aktiven Wasserstoff aufweisende reaktive Gruppen, wie Amine, Carbonylgruppen, Phenole oder Mercaptogruppen, sowie der Addition von Aziridinen an Carbonylgruppen, der Pfropfung von Vinylsilanen an Vinylpolymere oder der Copolymerisation von Vinylsilanen und/oder Methacryloxypropylsilanen und/oder Methacryloxymethylsilanen mit organischen Doppelbindung aufweisenden Monomeren, wobei durch Anwendung der kontrollierten freien radikalischen Polymerisation nach dem nitroxylkontrollierten CFRP-, dem ATRP- oder dem RAFT-Verfahren, Polymere mit enger Molmassenverteilung hergestellt werden können, welche die Silylgruppen an den Polymerenden tragen. Die Herstellmethoden können gegebenenfalls miteinander kombiniert werden.

Als Komponente (A) können aber auch Copolymere aus Siloxanblöcken und organischen Polymeren verwendet werden, wie z.B. in EP-B1 1 370 602 beschrieben, die zum Offenbarungsgehalt der vorliegenden Anmeldung zu zählen ist.

Bei den erfindungsgemäß eingesetzten Polymeren (A) kann es sich um Homopolymere wie auch um Copolymere handeln, die jeweils linear oder verzweigt sein können. Die Komponente (A) kann dabei die Gruppen -[(CR¹₂)_{b}-SiRₐ(OR²)₃₋ₐ] an beliebigen Stellen im Polymer aufweisen, wie etwa kettenständig und/oder endständig.

Die erfindungsgemäß eingesetzte Komponente (A) hat eine Viskosität von bevorzugt 100 bis 1 000 000 mPas, besonders bevorzugt 1000 bis 350 000 mPas, jeweils bei 25°C.

Komponente (A) sind handelsübliche Produkte bzw. nach in der Chemie gängigen Methoden herstellbar.

Bevorzugt handelt es sich bei Komponente (B) um Organosiliciumverbindungen enthaltend Einheiten der Formel

R¹²ₖDₗSi (OR¹³)ₘO_{(4-k-l-m)/2} (VI),

worin
R¹² gleich oder verschieden sein kann und einen einwertigen, gegebenenfalls substituierten SiC-gebundenen, von basischem Stickstoff freien organischen Rest bedeutet,
R¹³ gleich oder verschieden sein kann und Wasserstoffatom oder gegebenenfalls substituierte Kohlenwasserstoffreste bedeutet,
D gleich oder verschieden sein kann und einen einwertigen, Sigebundenen Rest mit basischem Stickstoff bedeutet,
k 0, 1, 2 oder 3 ist,
l 0, 1, 2, 3 oder 4 ist und
m 0, 1, 2 oder 3 ist,
mit der Maßgabe, dass die Summe aus k+l+m kleiner oder gleich 4 ist und pro Molekül mindestens ein Rest D anwesend ist.

Beispiele für Rest R¹² sind die für R angegebenen Beispiele.

Bei Rest R¹² handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für gegebenenfalls substituierte Kohlenwasserstoffreste R¹³ sind die für Rest R² angegebenen Beispiele.

Bei den Resten R¹³ handelt es sich vorzugsweise um Wasserstoffatom und gegebenenfalls mit Stickstoff und Sauerstoff substituierte Kohlenwasserstoffreste mit 1 bis 18 Kohlenstoffatomen, besonders bevorzugt um Wasserstoffatom und Kohlenwasserstoffreste mit 1 bis 3 Kohlenstoffatomen, insbesondere um Wasserstoffatom, Methyl- und Ethylrest.

Beispiele für Reste D sind Reste der Formeln H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH (CH₂) ₂-, C₂H₅NH(CH₂₎₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃-, cyclo-C₆H₁₁NH-, CH₃CH₂CH(CH₃)NH- und (C₂H₅)₂N(CH₂)₂- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um H₂N(CH₂)₃-, H₂N(CH₂)₂NH(CH₂)₃-, H₃CNH(CH₂)₃-, C₂H₅NH(CH₂)₃-, cyclo-C₆H₁₁NH-, CH₃CH₂CH(CH₃)NH- und cyclo-C₆H₁₁NH(CH₂)₃-Rest sowie um Umsetzungsprodukte der obengenannten primären Aminogruppen mit Verbindungen, die gegenüber primären Aminogruppen reaktive Doppelbindungen oder Epoxidgruppen enthalten, wobei H₂N(CH₂)₃-, H₂N(CH₂)₂NH(CH₂)₃-, H₃CNH(CH₂)₃-, C₂H₅NH(CH₂)₃-, cyclo-C₆H₁₁NH-, CH₃CH₂CH(CH₃)NH- und cyclo-C₆H₁₁NH(CH₂)₃-Rest besonders bevorzugt sind, insbesondere H₂N(CH₂)₃-, H₂N(CH₂)₂NH(CH₂)₃- und cyclo-C₆H₁₁NH (CH₂)₃-Rest.

Bei den erfindungsgemäß eingesetzten Organosiliciumverbindungen (B) kann es sich sowohl um Silane handeln, d.h. Verbindungen der Formel (VI) mit k+l+m=4, als auch um Siloxane, d.h. Verbindungen enthaltend Einheiten der Formel (VI) mit k+1+m≤3. Falls es sich bei den erfindungsgemäß eingesetaten Organosiliciumverbindungen um Organopolysiloxane handelt, sind solche, die aus Einheiten der Formel (VI) bestehen, bevorzugt.

Handelt es sich bei den Organosiliciumverbindungen enthaltend Einheiten der Formel (VI) um Silane, so ist k bevorzugt 0, 1 oder 2, besonders bevorzugt 0 oder 1, l bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (VI) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, (CH₃)₃Si-NH-Si(CH₃)₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cycilo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si (OC₂H₅)₂CH₃, cyclo-C₆H₁₁NH(CH₂)₃-Si (OH) ₃, cyclo-C₆H₁₁NH(CH₂)₃-Si(OH)₂CH₃, (CH₃)₂Si(NHCH(CH₃)CH₂CH₃)₂, (cyclo-C₆H₁₁NH)₃Si-CH₃, (CH₃CH₂(CH₃)CHNH)₃Si-CH₃, HN((CH₂)₃-Si(OCH₃)₃)₂ und HN((CH₂)₃-Si(OC₂H₅)₃)₂ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si (OCH₃) ₂CH₃, H₂N(CH₂)₂NH(CH₂)₃-Si(OC₂H₅))₂CH₃, H₂N(CH₂)₂NH(CH₂)₃-Si(OH)₃, H₂N(CH₂))₂NH(CH₂)₃-Si(OH)₂CH₃, cyclo-C₆H₁₁NH(CH₂)₃-Si(OCH₃)₃, cyclo-C₆H₁₁NH(CH₂)₃-Si(OC₂H₅)₃,cyclo-C₆H₁₁NH(CH₂)₃-Si (OCH₃)₂CH₃,cyclo-C₆H₁₁NH(CH₂)₃-Si(OC₂H₅)₂CH₃, cyclo-C₆H₁₁NH(CH₂)₃-Si(OH)₃ sowie cyclo-C₆H₁₁NH(CH₂)₃-Si(OH)₂CH₃ bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃, H₂N(CH₂)₂NH(CH₂)₃-Si(OH)₃ und H₂N(CH₂)₂NH(CH₂)₃-Si(OH)₂CH₃ sowie jeweils deren Teilhydrolysate besonders bevorzugt sind. Falls es sich bei der Organosiliciumverbindung enthaltend Einheiten der Formel (VI) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, l und m kleiner oder gleich 3 ist. Beispiele für die erfindungsgemäß gegebenenfalls eingesetzten Siloxane enthaltend Einheiten der Formel (VI) sind H₂N(CH₂)₃-Si(OCH₃)₂-O-Si(CH₃)(OCH₃)₂, H₂N(CH₂)₃-Si(OC₂H₅)₂-O-Si(CH₃)(OCH₃)₂, H₂N(CH₂)₃-Si(OC₂H₅)₂-O-Si(CH₃) (OC₂H₅)₂, H₂N(CH₂)₃-Si(OCH₃)(CH₃)-O-Si(CH₃)(OCH₃)₂, H₂N(CH₂)₃-Si(OCH₃)(CH₃)-O-Si(OCH₃)₃, H₂N(CH₂)₃-Si(OC₂H₅)(CH₃)-O-Si(OCH₃)₃, H₂N(CH₂)₂NH(CH₂)₃-Si(OCH₃)₂-O-Si(CH₃)(OCH₃)₂, H₂N(CH₂)₂NH(CH₂)₃-Si(OC₂H₅)₂-O-Si(CH₃)(OCH₃)₂, H₂N(CH₂)₂NH(CH₂)₃-Si(OC₂H₅)₂-O-Si(CH₃)(OC₂H₅)₂, H₂N(CH₂)₂NH(CH₂)₃-Si(OCH₃)(CH₃)-O-Si(CH₃)(OCH₃)₂, H₂N(CH₂)₂NH(CH₂)₃-Si(OCH₃)(CH₃)O-Si(OCH₃)₃, H₂N(CH₂)₂NH(CH₂)₃-Si(OC₂H₅)(CH₃)-O-Si(OCH₃)₃, cyclo-C₆H₁₁NH(CH₂)₃-Si(OCH₃)₂-O-Si(CH₃)(OCH₃)₂, cyclo-C₆H₁₁NH(CH₂)₃-Si(OC₂H₅)₂-O-Si(CH₃)(OCH₃)₂, cyclo-C₆H₁₁NH(CH₂)₃-Si(OC₂H₅)₂-O-Si(CH₃)(OC₂H₅)₂, cyclo-C₆H₁₁NH(CH₂)₃-Si(OCH₃)(CH₃)-O-Si(CH₃)(OCH₃)₂, cyclo-C₆H₁₁NH(CH₂)₃-Si (OCH₃) (CH₃)-O-Si(OCH₃)₃, cyclo-C₆H₁₁NH(CH₂)₃-Si(OC₂H₅)(CH₃)-O-Si(OCH₃)₃, H₂N(CH₂)₃-Si(OCH₃)₂-(O-Si(CH₃)₂)₀₋₁₀₀-(O-Si(CH₃)-(CH₂)₃NH₂)₀₋₁₀₀-O-Si(OCH₃)₂-(CH₂)₃NH₂, H₂N(CH₂)₂NH(CH₂)₃-Si(OCH₃)₂-(O-Si(CH₃)₂)₀₋₁₀₀-(O-Si(CH₃)-(CH₂)₃ NH(CH₂)₂NH₂)₀₋₁₀₀-O-Si(OCH₃)₂-(CH₂)₃NH (CH₂)₂NH₂, H₂N(CH₂)₃-Si(OCH₂CH₃)₂-(O-Si(OCH₂CH₃)₂)₁₋₁₀₀-(O-Si(OCH₂CH₃)(CH₂)₃NH₂)₀₋₁₀₀-O-Si(OCH₂CH₃)₂-(CH₂)₃NH₂, Si(OCH₂CH₃)₃-(O-Si(OCH₂CH₃)₂)₀₋₁₀₀-(O-Si(OCH₂CH₃)(CH₂)₃NH₂)₁₋₁₀₀-O-Si(OCH₂CH₃)₃ und cyclo-C₆H₁₁NH(CH₂)₃-Si(OCH₃)₂- (O-Si(CH₃)₂)₀₋₁₀₀-(O-Si(CH₃) - (CH₂) ₃ NH cyclo-C₆H₁₁)₀₋₁₀₀-O-Si(OCH₃)₂-(CH₂)₃NHcyclo-C₆H₁₁.

Bevorzugt handelt es sich bei Komponente (B) um H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃), H₂N(CH₂)₂NH(CH₂)₃-Si(OC₂H₅)₃, H₂N(CH₂)₂NH(CH₂)₃-Si(OCH₃)₂CH₃, (CH₃)₂Si(NHCH(CH₃)CH₂CH₃)₂, H₂N(CH₂)₃-Si(OCH₃)₂-(O-Si(CH₃)₂)₀₋₁₀₀-(O-Si(CH₃)-(CH₂)₃NH₂)₀₋₁₀₀-O-Si(OCH₃)₂-(CH₂)₃NH₂, H₂N(CH₂)₂NH(CH₂)₃-Si(OCH₃)₂-(O-Si(CH₃)₂)₀₋₁₀₀-(O-Si(CH₃)-(CH₂)₃ NH(CH₂)₂NH₂)₀₋₁₀₀-O-Si(OCH₃)₂-(CH₂)₃NH(CH₂)₂NH₂, H₂N(CH₂)Si(OCH₂CH₃)₂- (O-Si(OCH₂CH₃)₂)₁₋₁₀₀-(O-Si (OCH₂CH₃)(CH₂)₃NH₂)₀₋₁₀₀-O-Si(OCH₂CH₃)₂-(CH₂)₃NH₂, Si (OCH₂CH₃)₃-(O-Si(OCH₂CH₃)₂)₀₋₁₀₀-(O-Si(OCH₂CH₃)(CH₂)₃NH₂)₁₋₁₀₀-O-Si (OCH₂CH₃)₃, (cyclo-C₆H₁₁NH)₃Si-CH₃, (CH₃CH₂(CH₃)CHNH)₃Si-CH₃, (CH₃CH₂(CH₃)CHNH)₂Si-(CH₃)₂, ((CH₃)₂N)₂C=N-CH₂CH₂CH₂Si(OCH₃)₃, ((CH₃)₂N)₂C=N-CH₂CH(OH)CH₂O(CH₂)₃Si(OCH₃)₃,
wobei H₂N(CH₂)₃-Si(OCH₃)₃, H₂N(CH₂)₃-Si(OC₂H₅)₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂-(O-Si(CH₃)₂)₀₋₁₀₀-(O-Si(CH₃)-(CH₂)₃NH(CH₂)₂NH₂)₀₋₁₀₀-O-Si(OCH₃)₂-(CH₂)₃NH(CH₂)₂NH₂, H₂N(CH₂)₃-Si(OCH₂CH₃)₂-(O-Si(OCH₂CH₃)₂)₁₋₁₀₀-(O -Si(OCH₂CH₃)(CH₂)₃NH₂)₀₋₁₀₀-O-Si(OCH₂CH₃)₂-(CH₂)₃NH₂, Si (OCH₂CH₃)₃-(O-Si(OCH₂CH₃)₂)₀₋₁₀₀-(O-Si(OCH₂CH₃)(CH₂)₃NH₂)₁₋₁₀₀-O-Si (OCH₂CH₃)₃, ((CH₃)₂N)₂C=N-CH₂CH₂CH₂Si(OCH₃)₃ und ((CH₃)₂N)₂C=N-CH₂CH(OH)CH₂O(CH₂)₃Si(OCH₃)₃ besonders bevorzugt sind, insbesondere H₂N(CH₂)₃-Si(OCH₃)₃, H₂N(CH₂)₃-Si(OC₂H₅)₃, H₂N(CH₂)₂NH(CH₂)₃-Si(OCH₃)₃ and H₂N(CH-₂)₂NH(CH₂)₃-Si(OC₂H₅)₃-Weitere Beispiele für Komponente (B) sind Umsetzungsprodukte der oben genannten primäre Aminogruppen enthaltenden Silane oder Siloxane mit Verbindungen, die gegenüber primären Aminogruppen reaktive Doppelbindungen oder Epoxidgruppen enthalten, unter Beibehaltung des basischen Charakters des Stickstoffs. Beispiele für Verbindungen mit reaktiven Doppelbindungen sind (3-Methacryloxypropyl)-trimethoxysilan, (3-Methacryloxypropyl)-triethoxysilan, (Methacryloxymethyl)-trimethoxysilan, (Methacryloxymethyl)-triethoxysilan, (Methacryloxymethyl)-methyldimethoxysilan, (Methacryloxymethyl)-methyldiethoxysilan, Acrylonitril, 1,6-Hexandiol-diacrylat, 1,6-Hexandiylbis-[oxy-(2-hydroxy-3,1-propandiyl)]bisacrylat und Maleinsäurediethylester. Beispiele für Verbindungen mit Epoxidgruppen sind 3-Glycidoxypropyl-trimethoxysilan, 3-Glycidoxyoxypropyl-trimethoxysilan, Glycidyl-isobutylether, epoxydiertes Sojaöl, o-Kresylglycidether, Trimethylolpropantriglycidether, 1,4-Butandiol-diglycidether. Diese Umsetzungsprodukte können als solche direkt bei der Herstellung der erfindungsgemäßen Massen eingesetzt werden. Sie können aber auch erst in der erfindungsgemäßen Masse entstehen, in dem zu deren Herstellung primäre Aminogruppen enthaltende Silane oder Siloxane sowie Verbindungen, die gegenüber primären Aminogruppen reaktive Doppelbindungen oder Epoxidgruppen enthalten, eingesetzt werden.

Komponente (B) sind handelsübliche Produkte bzw. nach in der Chemie gängigen Verfahren herstellbar.

Die erfindungsgemäßen Massen enthalten Komponente (B) in Mengen von bevorzugt 0,001 bis 10 Gewichtsteilen, besonders bevorzugt 0,01 bis 5 Gewichtsteilen, insbesondere 0,05 bis 2 Gewichtsteilen, jeweils bezogen auf 100 Gewichtsteile Komponente (A). Bevorzugt handelt es sich bei Rest R³ um Phenyl-, Alkylphenyl-, Alkoxyphenyl- oder Alkyl(Alkoxy)phenylreste, wobei sich die Alkyl- und Alkoxygruppen in beliebiger Stellung am Phenylring befinden können.

Besonders bevorzugt handelt es sich bei Rest R³ um Phenyl-, Alkylphenyl-, Alkoxyphenyl- oder Alkyl(Alkoxy)phenylreste, wobei die Alkyl- und Alkoxygruppen jeweils 1 bis 18 Kohlenstoffatome enthalten und sich in beliebiger Stellung am Phenylring befinden können.

Beispiele für Reste R³ sind der Phenyl-, 2-Ethylphenyl-, 4-Ethylphenyl-, 2-Ethoxyphenyl-, 4-Ethoxyphenyl-, 4-Isododecylphenyl- und der 5-(tert.-Butyl)-2-ethoxyphenylrest.

Bevorzugt handelt es sich bei der erfindungsgemäß eingesetzten Verbindung (C) um N-(2-Ethoxyphenyl)-N'-(2-ethylphenyl)-ethyl-endiamid (CAS: 23949-66-8), N,N'-Diphenyl-ethylendiamid (CAS 620-81-5), um N-(5-(1,1-Dimethylethyl)-2-ethoxyphenyl)-N'-(2-ethylphenyl)-ethylendiamid (CAS 35001-52-6) und um N-(2-ethoxyphenyl)-N'-(4-isododecylphenyl)-ethylendiamin (CAS 82493-14-9), wobei N-(2-Ethoxyphenyl)-N'-(2-ethylphenyl)-ethylendiamid (CAS: 23949-66-8) und N-(2-ethoxyphenyl)-N'-(4-isododecylphenyl)-ethylendiamin (CAS 82493-14-9) besonders bevorzugt sind.

Die erfindungsgemäßen Massen enthalten Komponente (C) in Mengen von bevorzugt 0,01 bis 10 Gewichtsteilen, besonders bevorzugt 0,05 bis 5 Gewichtsteilen, insbesondere 0,1 bis 3 Gewichtsteilen, jeweils bezogen auf 100 Gewichtsteile Komponente (A).

Die erfindungsgemäß eingesetzte Komponente (C) sind handelsübliche Produkte bzw. nach in der Chemie gängigen Methoden herstellbar.

Des Weiteren können die erfindungsgemäßen Massen alle Bestandteile enthalten, die auch bisher in vernetzbaren Massen eingesetzt wurden, wie z.B. Vernetzer (D), Weichmacher (E), Füllstoffe (F), Haftvermittler (G), organische Lösungsmittel (H), Katalysator (K) und Additive (L), wobei (D), (E) und (G) verschieden sind zu den Komponenten (A) und (B).

Bei den in den erfindungsgemäßen Massen gegebenenfalls eingesetzten Vernetzern (D) kann es sich um beliebige, bisher bekannte Vernetzer mit mindestens zwei kondensationsfähigen Resten handeln, wie beispielsweise Silane und Siloxane mit mindestens zwei Organyloxygruppen, die von Komponente (A) und Komponente (B) verschieden sind.

Bevorzugt handelt es sich bei den in den erfindungsgemäßen Massen gegebenenfalls eingesetzten Vernetzern (D) um Siloxanvernetzer und Silanvernetzer, wie Tetramethoxysilan, Tetraethoxysilan, Tetrapropoxysilan, Tetrabutoxysilan, Methyltrimethoxysilan, Dimethyldimethoxysilan, Methyltriethoxysilan, Methylvinyldimethoxysilan, Vinyltrimethoxysilan, Butyltrimethoxysilan, Vinyltriethoxysilan, Phenyltrimethoxysilan, Diphenyldimethoxysilan, Phenyltriethoxysilan, 1,1,1-Trimethyl-3-dimethoxy-3-vinyl-disiloxan, 1,1,1-Trimethyl-3-ethoxy-3-methoxy-3-vinyl-disiloxan, 1,1,1-Trimethyl-3-trimethoxy-disiloxan, 1,1,1-Trimethyl-3-diethoxy-3-vinyl-disiloxan, 1,1,1,5,5,5-Hexamethyl-3,3-dimethoxy-trisiloxan, 1,1,1,5,5,5-Hexamethyl-3,3-diethoxy-trisiloxan, 1,1,1,5,5,5-Hexamethyl-3-ethoxy-3-methoxy-trisiloxan, (N-Cyclo-hexylaminomethyl)methyldiethoxysilan, (N-Cyclohexylaminomethyl)methyldimethoxysilan, (N-Cyclohexylaminomethyl)methylethoxymethoxysilan, (N-Cyclohexylaminomethyl)triethoxysilan, (N-Cyclohexylaminomethyl)trimethoxysilan, (N-Phenylaminomethyl)-methyldiethoxysilan, (N-Phenylaminomethyl)trimethoxysilan, (Methacryloxymethyl)trimethoxysilan, (Methacryloxymethyl)triethoxysilan, (Methacryloxymethyl)methyldimethoxysilan, (Methacryloxymethyl)methyldiethoxysilan, (N-Morpholinomethyl)-triethoxysilan, N-(Trimethoxysilylmethyl)-O-methyl-carbamat, N-(Methyldimethoxysilylmethyl)-O-methyl-carbamat, 3-Cyanopropyltrimethoxysilan, 3-Cyanopropyltriethoxysilan, 3-(Glycidoxy)propyltri-ethoxysilan, 1,2-Bis(trimethoxysilyl)ethan, 1,2-Bis(triethoxysilyl)ethan, Methyltriacetoxysilan, Ethyltriacetoxysilan, Propyltriacetoxysilan, Di-t-butoxydiacetoxysilan, Methyltris(me-thylethylketoximo)silan und Vinyltris(methylethylketoximo)silan, Tetra-kis-(methylethylketoximo)silan, Bis(N-Methylbenzamido)ethoxy-methylsilan, Methyltris-(propenyloxy)silan, Vinyltris-(propenyloxy)silan sowie deren Teilhydrolysate, die ggf. auch durch Cohydrolyse, wie z.B. durch Cohydrolyse von Methyltrimethoxysilan und Dimethyldimethoxysilan, dargestellt werden können.

Besonders bevorzugt handelt es sich bei den Vernetzern (D) um Vinyltrimethoxysilan, 1,1,1-Trimethyl-3-dimethoxy-3-vinyl-disiloxan, N-(Trimethoxysilylmethyl)-O-methyl-carbamat und N-(Methyldimethoxysilylmethyl)-O-methyl-carbamat sowie deren Teilhydrolysate.

Die in den erfindungsgemäßen Massen gegebenenfalls eingesetzten Vernetzer (D) sind handelsübliche Produkte bzw. können nach in der Siliciumchemie bekannten Verfahren hergestellt werden.

Falls die erfindungsgemäßen Massen Vernetzer (D) enthalten, handelt es sich um Mengen von vorzugsweise 0,1 bis 10 Gewichtsteilen, besonders bevorzugt 0,5 bis 3 Gewichtsteilen, jeweils bezogen auf 100 Gewichtsteile Komponente (A). Bevorzugt enthalten die erfindungsgemäßen Massen Vernetzer (D).

Bei den in den erfindungsgemäßen Massen gegebenenfalls eingesetzten Weichmachern (E) kann es sich um beliebige, bisher bekannte Weichmacher handeln, die von Komponente (A), Komponente (B) und Komponente (D) verschieden sind.

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie z.B. Paraffinöle, Dialkylbenzole, Dialkylnaphthaline oder Mineralöle bestehend aus naphthenischen und paraffinischen Einheiten, Polyglykole, insbesondere Polypropylenglykole, die gegebenenfalls substituiert sein können, hochsiedende Ester, wie z.B Phthalate, Zitronensäureester oder Diester von Dicarbonsäuren, flüssige Polyester, Polyacrylate oder Polymethacrylate sowie Alkylsulfonsäureester.

Falls die erfindungsgemäßen Massen Weichmacher (E) enthalten, handelt es sich um Mengen von vorzugsweise 1 bis 300 Gewichtsteilen, besonders bevorzugt 10 bis 200 Gewichtsteilen, insbesondere 20 bis 100 Gewichtsteilen, jeweils bezogen auf 100 Gewichtsteile Bestandteil (A). Die erfindungsgemäßen Massen enthalten bevorzugt Weichmacher (E).

Bei den in den erfindungsgemäßen Massen gegebenenfalls eingesetzten Füllstoffen (F) kann es sich um beliebige, bisher bekannte Füllstoffe handeln.

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt sind die in den erfindungsgemäßen Massen gegebenenfalls eingesetzten Füllstoffe (F) weitgehend trocken. Dies kann z.B. erreicht werden, in dem die Füllstoffe (F) niedrigen Drücken ausgesetzt, auf Temperaturen von 50°C bis 1500°C erhitzt oder mit Mikrowellen behandelt werden, wobei auch beliebige Kombinationen dieser Methoden möglich sind.

Gegebenenfalls eingesetzte Füllstoffe (F) haben einen Feuchtigkeitsgehalt von bevorzugt unter 1 Gew.-%, besonders bevorzugt von unter 0,5 Gew.-%.

Bei den gegebenenfalls eingesetzten Füllstoffen (F) handelt es sich bevorzugt um hydrophobe pyrogene Kieselsäure, mit Siliziumdioxid und/oder Aluminiumoxid beschichtetes aus Rutil- und oder Anatasmodifikation bestehendes Titandioxid, Ruße und gefälltes oder gemahlenes Calciumcarbonat, besonders bevorzugt um hydrophobe pyrogene Kieselsäure und gefälltes oder gemahlenes Calciumcarbonat.

Falls die erfindungsgemäßen Massen Füllstoffe (F) enthalten, handelt es sich um Mengen von vorzugsweise 1 bis 300 Gewichtsteilen, besonders bevorzugt 1 bis 200 Gewichtsteilen, insbesondere 5 bis 200 Gewichtsteilen, jeweils bezogen auf 100 Gewichtsteile Bestandteil (A). Die erfindungsgemäßen Massen enthalten bevorzugt Füllstoffe (F).

Bei den in den erfindungsgemäßen Massen gegebenenfalls eingesetzten Haftvermittlern (G) kann es sich um beliebige, bisher bekannte Haftvermittler handeln, die von Komponente (A), Komponente (B), Komponente (D) und Komponente (E) verschieden sind.

Beispiele für die in den erfindungsgemäßen Massen eingesetzten Haftvermittler (G) sind organische Verbindungen, Silane und Organopolysiloxane mit funktionellen Gruppen, wie beispielsweise solche mit Epoxy-, Glycidoxypropyl-, Amino-, Amido-, Mercapto-, Carboxyl-, Anhydrido- oder Methacryloxypropylresten sowie Tetraalkoxysilane und T- oder Q-Gruppen enthaltende Siloxane, die ggf. Alkoxgruppen aufweisen können. Falls jedoch bereits eine andere Komponente, wie etwa Komponente (A), (B), (D) oder (E), die genannten funktionellen Gruppen aufweist, kann auf einen Zusatz von Haftvermittler (G) verzichtet werden.

Falls die erfindungsgemäßen Massen Haftvermittler (G) enthalten, handelt es sich um Mengen von vorzugsweise 0,1 bis 50 Gewichtsteilen, besonders bevorzugt 0,5 bis 20 Gewichtsteilen, insbesondere 1 bis 10 Gewichtsteilen, jeweils bezogen auf 100 Gewichtsteile Bestandteil (A). Die erfindungsgemäßen Massen enthalten bevorzugt Haftvermittler (G).

Als gegebenenfalls eingesetzte organische Lösungsmittel (H) können alle bisher bekannten organischen Lösungsmittel eingesetzt werden.

Beispiele für organische Lösungsmittel (H) sind organische Lösungsmittel mit einem Wassergehalt von unter 5 Gewichts-%, insbesondere von unter 1 Gewichts-%, wie Alkohole, wie Methanol, Ethanol, Isopropanol, 1,2-Propandiol; Ketone, wie Aceton oder Cyclohexanon; Methylethylketoxim; Ester, wie Butylacetat, Ethyloleat, Diethyladipat, Propylencarbonat, Triethylphosphat, Glycerintriacetat oder Dimethylphthalat; Ether, wie Dipropylenglykolmonomethylether, Tetrahydrofuran oder Butoxyethoxyethylacetat; Amide wie N,N-Dimethylacetamid oder N,N-Dimethylformamid; Sulfoxide wie Dimethylsulfoxid; Pyrrolidone wie N-Methyl-2-pyrrolidon oder N-Octyl-2-pyrrolidon; Kohlenwasserstoffe, wie Hexan, Cyclohexan, Octan, Dodecan; halogenierte Kohlenwasserstoffe wie Trichlorethan oder Difluortetrachlorethan, Aromaten, wie Alkylnaphthene oder Alkylbenzole.

Falls die erfindungsgemäßen Massen organische Lösungsmittel (H) enthalten, handelt es sich um Mengen von vorzugsweise 0,1 bis 10 Gewichtsteilen, besonders bevorzugt 0,2 bis 5 Gewichtsteilen, insbesondere 0,5 bis 2 Gewichtsteilen, jeweils bezogen auf 100 Gewichtsteile Bestandteil (A). Die erfindungsgemäßen Massen enthalten bevorzugt organisches Lösungsmittel (H).

Als gegebenenfalls eingesetzte Katalysatoren (K) können alle bisher bekannten Kondensationskatalysatoren eingesetzt werden.

Beispiele für Kondensationskatalysatoren (K) sind die bisher bekannten Titanverbindungen, wie Tetra-tert.-butyl-orthotitanat, Titan(IV)-bis-(ethylacetoacetato)-diisobutoxid, Titan(IV)-bis-(ethylacetoacetato)-dimethoxid, Titan(IV)-bis-(ethylaceto-acetato)-diethoxid, Titan(IV)-bis-(ethylacetoacetato)-monoethoxid-monomethoxid oder Titan(IV)-bis-(ethylacetoacetato)-diisopropoxid und organische Zinnverbindungen, wie Di-n-butylzinndilaurat, Di-n-butylzinndiacetat, Di-n-butylzinnoxid, Di-n-butylzinndineodecanoat, Di-n-butylzinndiacetylacetonat, Di-n-butylzinnmaleat, Di-n-octylzinndiacetat, Di-n-octylzinndilaurat, Di-n-octylzinnoxid, Di-n-octylzinnmaleat, Di-n-octylzinndi(2-ethyl)hexanoat, Di-n-octylzinnneodecanoat, Di-n-octylzinnisodecanoat und deren Teilhydrolysate und Umsetzungsprodukte dieser Verbindungen oder Teilhydrolysate mit Alkoxysilanen, wie Tetraethoxysilan, Methyltriethoxysilan, Methyltrimethoxysilan, Propyltrimethoxysilan, 3-Aminopropyl-trimethoxysilan, 3-Aminopropyl-triethoxysilan, 2-Aminoethyl-3-aminopropyl-trimethoxysilan, 2-Aminoethyl-3-aminopropyl-trimethoxysilan oder deren Kondensations- oder Cokondensationsprodukte, Estern, wie Phthalsäurediisodecylester, Phthalsäuredi-n-octylester, oder Phthalsäurediisodecylester, sowie Mischungen oder Umsetzungsprodukte von Titan- oder Zinnverbindungen mit Phosphonsäuren, Phosphinsäuren, Phosphonsäuremonoestern oder Phosphorsäuremono- oder diestern.

Des Weiteren können als Kondensationskatalysatoren (K) auch Lewissäuren eingesetzt werden, wie Titantetrachlorid, Siliziumtetrachlorid, Siliziumtetrafluorid, t-Butyltrichlorogerman, Methyltrichlorsilan, Dimethyldichlorsilan, Bortrifluorid, sowie deren Additionsaddukt mit Aminen, wie Ethylamin, Ether, wie Diethylether oder Alkoholen, wie Methanol, Ethanol oder Isopropanol.

Ferner können als Kondensationskatalysatoren (K) auch Säuren, welche B-OH, C(O)-OH, S(O)₂-OH und/oder P(O)-OH Gruppen enthalten, sowie HF, HCl, HBr oder HJ eingesetzt werden. Beispiele für solche Säuren sind Carbonsäuren, Borsäure, Boronsäuren, Borinsäuren, Sulfonsäuren, Phosphorsäuren, Phosphonsäuren und Phosphinsäuren oder deren Kondensations- oder Cokondensationsprodukte sowie deren Mono-, Di- oder Triester von Alkoholen wie Methanol, Ethanol, Isopropanol, n-Propanol, tert-Butanol, n-Butanol, iso-Butanol, Cyclohexanol, n-Octylalkohol, Laurylalkohol; von Silanolen, wie Trimethylsilanol, Methyldimethoxysilanol oder Triethoxysilanol. Beispiele sind die n-Octansäure, Neodecansäure, Ölsäure, Adipinsäuremonoethylester, Malonsäuremonoethylester, Borsäuremonooctylester, Borsäurediisodecylester, Butylboronsäure, Dibutylborinsäureaminethylester, Octylsulfonsäure, Dodecylbenzolsulfonsäure, Octylphosphat, Dioctylphosphat, Octylphosphonsäure, Octylphosphonsäuremonomethylester, Octylphosphonsäuremonotrimethylsilylester, Laurylphosphonsäure, Vinylphosphonsäure und Diisooctylphosphinsäure.

Des Weiteren können als Kondensationskatalysatoren (K) auch Basen eingesetzt werden, insbesondere Verbindungen, welche basischen Stickstoff oder Phosphor enthalten. Beispiele sind Amine, Hydrazine, Amidine, Guanidine, Tetraalkylammoniumhydroxid oder Tetraalkylphosphoniumhydroxid. Beispiele sind das Ethylamin, Butylamin, Laurylamin, Diethylamin, Di-n-butylamin, Triethylamin, Triisooctylamin, Trioctylamin, Methyldioctylamin, N-Diethylamino-3-propylamin, 1-o-Tolylbiguanide, Tetramethylguanidin, Butylguanidin, 1,5-Diazabicyclo[4.3.0]non-en, 1,4-Diazabicyclo[2.2.2]octan, 1,8-Diazabicyclo[5.4.0]undec-7-en, 1,5,7-Triazabicyclo[4.4.0]-dec-5-en, Methyl-1,5,7-Triazabicyclo-[4.4.0]-dec-5-en, Tetrabutylammoniumhydroxid und Tetrabutylphosphoniumhydroxid.

Durch synergetische Kombinationen von oben genannten Katalysatoren kann die katalytische Wirkung auf die Hydrolyse von Si-OR und/oder auf die Kondensationsreaktion von Si-OH mit Si-OH oder Si-OR stark beschleunigt werden und somit die Aushärtung beschleunigt oder die Menge an Katalysator verringert werden.

Mögliche synergetische Kombinationen sind Säure mit Basen, Lewissäuren mit Basen und die obengenannten Zinnverbindungen mit Basen.

Bevorzugt handelt es sich bei den gegebenenfalls eingesetzten Katalysatoren (K) um Titanverbindungen, Organozinnverbindungen, organische Basen und organische Basen mit Säuren, welche C(O)-OH und/oder P(O)-OH Gruppen enthalten, wobei Organozinnverbindungen besonders bevorzugt sind.

Die gegebenenfalls eingesetzte Komponente (K) sind handelsübliche Produkte bzw. nach in der Chemie gängigen Methoden herstellbar.

Die erfindungsgemäßen Massen enthalten Komponente (K) in Mengen von bevorzugt 0,0001 bis 5 Gewichtsteilen, besonders bevorzugt 0,001 bis 3 Gewichtsteilen, insbesondere 0,005 bis 2 Gewichtsteilen, jeweils bezogen auf 100 Gewichtsteile Komponente (A). Die erfindungsgemäßen Massen enthalten bevorzugt Katalysator (K).

Bei den in den erfindungsgemäßen Massen gegebenenfalls eingesetzten Additiven (L) kann es sich um beliebige, bisher bekannte Additive handeln.

Beispiele für Additive (L) sind Pigmente, Farbstoffe, Riechstoffe, Oxidationsinhibitoren, wie sterisch gehinderte Phenole, z.B. 2,6-Di-tert.-butyl-4-methyl-phenol (BHT), 1,6-Hexamethylen-bis-[3-(3,5-di-tert.-butyl-4-hydroxyphenyl)propionat], 2,2'-Methylen-bis(4-ethyl-6-tert.-butylphenol), 6,6'-Di-tert.-butyl-2,2'-thiodi-p-cresol, (2,4,6-Trioxo-1,3,5-triazin-1,3,5(2H,4H,6H)-triyl)triethylen-tris(3-(3,5-di-tert-butyl-4-hydroxyphenyl)propionat), 2,4,6-Tris-(3,5-di-tert.-butyl-4-hydroxybenzyl)mesitylen, Octadecyl-3-(3,5-di-tert.-butyl-4-hydroxyphenyl)propionat, N,N'-hexan-1,6-diylbis[3-(3,5-ditert.-butyl-4-hydroxyphenylpropionamid], 1,3,5-Tris(3,5-ditert.-butyl-4-hydroxybenzyl)-1,3,5-triazin-2,4,6(1H,3H,5H)-trion, 2-tert.-Butyl-6-(3-tert.-butyl-2-hydroxy-5-methylbenzyl)-4-methylphenyl-acrylat, C7-C9-verzweigtes Alkyl-[3-(3,5-di-tert.-butyl-4-hydroxyphenyl)]propionat, Thiodiethylen-bis[3-(3,5-di-tert-butyl-4-hydroxyphenyl)propionat], Pentaerythritoltetrakis(3-(3,5-di-tert.-butyl-4-hydroxyphenyl)propionat), Diethyl[[3,5-bis(1,1-dimethylene)-4-hydroxyphenyl]methyl]phosphonat, 1,2-Bis(3,5-di-tert.-butyl-4-hydroxyhydrocinnamoyl)hydrazin, 4,4'-Thiobis(2-tert.-butyl-5-methylphenol), 1,3,5-Tris(4-tert.-butyl-3-hydroxy-2,6-dimethylbenzyl)-1,3,5-triazine-2,4,6-(1H,3H,5H)-trion, Polymer mit sterisch gehindertem Phenol mit der CAS-Nr 68610-51-5 und 2,2'-Methylen-bis[6-(1-methylcyclohexyl)-p-cresol] oder Vitamin E, Fungizide, wie z.B. Isothiazolinone, insbesondere n-2-Octyl-2H-isothiazolin-3-on, n-Butyl-1,2-benzisothiazolin-3-on oder 4,5-Dichlor-2-octyl-3(2H)-isothiazolin-3-on, 3-Iod-2-propinylbutylcarbamat, Thiabendazol, Carbendazim, 3-Benzo[b]thien-2-yl-5,6-dihydro-1,4,2-oxathiazin,4-oxide, Benzthiophen-2-cyclohexylcarboxamid-S,S-dioxid, 2-Thiazol-4-yl-1H-benzoimidazol, silberhaltige Trägerstoffe oder Nano-Silber, Triazolderivate, wie Tebuconazol oder Kombinationen von zwei oder drei Wirkstoffen, Mittel zur Beeinflussung der elektrischen Eigenschaften, wie leitfähiger Ruß, flammabweisend machende Mittel, Lichtschutzmittel, z.B. Benzotriazolderivate wie 2-(5-Chloro-2H-benzotriazol-2-yl)-6-(1,1-dimethylethyl)-4-methyl-phenol, 2,2'-(1,4-Phenylen)bis(4H-3,1-benzoxazin-4-on), 2-(2H-Benzotriazol-2-yl)-6-dodecyl-4-methylphenol, 2-(2H-Benzotriazol-2-yl)-4,6-bis(1-methyl-1-phenylethyl)phenol, 2-(2'-Hydroxy-3',5'-di-tert.-amylphenyl)benzotriazol, 2-(2'-Hydroxyphenyl)-benzotriazol, 2-(2-Hydroxy-3-sec.-butyl-5-tert.-butylphenyl)-benzotriazol, 2,2'Methylen-bis[6-(2H-benzotriazol-2-yl)-4-(1,1,3,3-tetramethylbutyl)phenol], 2-(2'-Hydroxy-3',5'-ditert.-butylphenyl)-5-chlorobenzotriazol, 2-(2'-Hydroxy-5'-methylphenyl)benzotriazol, 2-(2H-Benzotriazol-2-yl)4-methyl-6-dodecylphenol, 2,4-Di-tert.-butyl-6(5-chlorobenzotriazol-2-yl)phenol, 2-(2H-Benzotriazol-2-yl)-4,6-di-tert.-pentylphenol, Formamidine, wie Ethyl-4-[[(methylphenylamino)methylen]amino]-benzoat, Nanometalloxide z.B. des Titan, Eisens und Zinks, wobei die Oxide des Titans mit Silizium- und/oder Aluminiumoxid beschichtet sind, Hydroxyphenyltriazine wie 2,4-Bis(2,4-dimethylphenyl)-6-(2-hydroxy-4-iso-octyloxyphenyl)-1,3,5-triazin, 2-[4-[(2-Hydroxy-3-dodecyloxypropyl)oxy]-2-hydroxyphenyl]-4,6-bis(2,4-dimethylphenyl)-1,3,5-triazin, 2-[4,6-Bis(2,4-dimethylphenyl)-1,3,5-triazin-2-yl]-5-{3-[(2-ethylhexyl)oxy]-2-hydroxypropoxy}phenol und Isooctyl-2-[4-[4,6-bis[(1,1'-biphenyl)-4-yl]-1,3,5-triazin-2-yl]-3-hydroxyphenoxy]propanoat, wie Radikalfänger, z.B. sterisch gehinderte Amine (HALS) wie Bis(2,2,6,6-tetramethyl-4-piperidyl)sebacat, 1,3,5-Triazin-2,4,6-triamin-N,N'-[1,2-ethan-, diyl-bis[[[4,6-bis-[butyl(1,2,2,6,6-pentamethyl-4-piperidinyl)amino]-1,3,5-triazin-2-yl]imino]-3,1-propandiyl]], 2,2,6,6-Tetramethyl-4-piperidinyl Ester von C12-21 und C18-ungesättigten Fettsäuren, polymeres HALS mit der CAS-Nr. 65447-77-0, 3-Dodecyl-1-(2,2,6,6-tetramethyl-4-piperidinyl)-2,5-pyrrolidindion, Poly[(6-morpholino-s-triazin-2,4-diyl)[2,2,6,6-Tetramethyl-4 piperidyl)imino]-hexamethylen [(2,2,6,6-tetramethyl-4-piperidyl)imino],Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]], Methyl-1,2,2,6,6-pentamethyl-4-piperidylsebacat, Bis(1,2,2,6,6-pentamethyl-4-piperidyl)sebacat, Bis(2,2,6,6-tetramethyl-4-piperidyl)sebacat, N,N-Diphenyl-p-phenylendiamin, 1-Ethyl-2,2,6,6-tetramethyl-4-piperidyl-succinat-polyester, Bis(2,2,6,6-Tetramethyl-1-octyloxy-4-piperidyl)sebacat und polymeres HALS mit der CAS Number 192268-64-7, Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, wie Triisodecylphosphit, Tris(nonylphenyl)phosphit oder Diisodecylphenylphosphit, sog. Scavenger, wie Si-N enthaltende Silazane oder Silylamide und Thixotropiermittel, wie beispielsweise Amidwachse oder hydriertes Rizinusöl.

Falls die erfindungsgemäßen Massen Additive (L) enthalten, handelt es sich bevorzugt um Pigmente, Farbstoffe, Oxidationsinhibitoren, Fungizide, Radikalfänger und Thixotropiermittel, besonders bevorzugt um Pigmente, Fungizide, Radikalfänger und Thixotropiermittel.

Falls die erfindungsgemäßen Massen Additive (L) enthalten, handelt es sich um Mengen von vorzugsweise 0,01 bis 20 Gewichtsteilen, besonders bevorzugt 0,05 bis 10 Gewichtsteilen, insbesondere 0,1 bis 5 Gewichtsteilen, jeweils bezogen auf 100 Gewichtsteile Bestandteil (A). Die erfindungsgemäßen Massen enthalten bevorzugt Additive (L).

Besonders bevorzugt handelt es sich bei den erfindungsgemäßen Massen um solche herstellbar unter Verwendung von
(A) Verbindungen der Formel (I),
(B) basischen Stickstoff enthaltende Organosiliciumverbindungen enthaltend Einheiten der Formel (VI),
(C) Oxaldianilide der Formel (II),
(D) Vernetzer,
   gegebenenfalls
(E) Weichmacher,
   gegebenenfalls
(F) Füllstoffe,
   gegebenenfalls
(G) Haftvermittler,
   gegebenenfalls
(H) organische Lösungsmittel,
   gegebenenfalls
(K) Katalysatoren und
   gegebenenfalls
(L) Additive.

Insbesondere enthalten die erfindungsgemäßen Massen außer den Komponenten (A) bis (L) keine weiteren Bestandteile.

Bei den erfindungsgemäßen Massen handelt es sich bevorzugt um zähflüssig bis pastöse Massen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Zur besseren Verteilung, insbesondere bei kleinen Zugabemengen bzw. festen Stoffen, kann es von Vorteil sein, einzelne Komponenten mit einer Flüssigkeit, wie z.B. Vernetzer (D), Weichmacher (E) oder organischen Lösungsmitteln (H), zu verdünnen bzw. zu lösen. Man kann aber auch, insbesondere bei festen Stoffen, diese in einer Flüssigkeit dispergieren, gegebenenfalls mit Zusatz von geeigneten Füllstoffen und Mahlhilfsmitteln, wie Bariumsulfat, pyrogen hergestellte Kieselsäure oder Calciumcarbonat. Als Flüssigkeiten sind alle Flüssigkeiten geeignet, in denen sich der zu dispergierende Feststoff nicht oder nicht vollständig löst. Beispiele für solche Flüssigkeiten sind die Komponenten (D), (E) und organische Lösungsmittel (H). Die Dispersion kann mittels geeigneter Geräte, wie Kugelmühle und/oder Dreiwalzenstuhl hergestellt werden. Die mittlere Korngröße des zu dispergierenden Feststoffs in der Dispersion liegt bevorzugt im Bereich von 0,1 bis 100 µm, besonders bevorzugt im Bereich von 0,5 bis 50 µm.

Falls erwünscht, können einzelne Komponenten, insbesondere flüssige Stoffe, bei der Herstellung der erfindungsgemäßen Massen in verkapselter Form eingesetzt werden, was jedoch nicht bevorzugt ist. Dabei ist der flüssige Stoff von einem festen Material umgeben, die Freigabe erfolgt durch Diffusion und/oder Kontakt mit Luftfeuchtigkeit und/oder Kontakt mit Sauerstoff und/oder durch Einwirkung elektromagnetischer Wellen, wie UV-Strahlen oder Mikrowellen, oder durch Schallwellen, wie Ultraschall.

Man kann aber auch, insbesondere bei flüssigen Stoffen, diese an aktiven Oberflächen gebunden, zugeben, was nicht bevorzugt ist. Solche Trägermaterialien können Stoffe mit einer BET-Oberfläche von über 10 m²/g sein, wie pyrogene Kieselsäure mit hydrophiler oder hydrophober Oberfläche, gefällte Kieselsäure, gefälltes Calciumcarbonat mit unbeschichteter oder beschichteter (z.B. Stearinsäure) Oberfläche, Ruße, wie Furnace- und Acetylenruß und Silicium-Aluminium-Mischoxide großer BET-Oberfläche, faserförmige Füllstoffe, wie Asbest sowie Kunststofffasern; Stoffe, welche kleine Moleküle in Poren und/oder Zwischenschichten einlagern können, wie Tonerden, wie Aluminiumsilikate, Diatomeenerde, Calciumsilikat, Zirkoniumsilikat, Zeolithe oder polymere Träger, welche durch Copolymerisation aus Monomeren , wie Acrylsäureester oder Styrol, und geeigneten Vernetzern, wie Divinylbenzol oder aliphatischen Dienen durch geeignete Herstellverfahren, wie Suspensionspolymerisation, so hergestellt werden, dass Mikroporen entstehen oder durch Zusatz von Inertmaterial, wie Isoparaffine, so hergestellt werden, dass Makroporen entstehen.

Bevorzugt erfolgt das erfindungsgemäße Vermischen der einzelnen Bestandteile unter weitestgehendem Ausschluss von Wasser.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die auch bisher unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen kondensationsvernetzbaren Massen und die daraus hergestellten Formkörper haben den Vorteil, dass sie UVbeständig sind und sich nicht bzw. nur unwesentlich verfärben.

Des Weiteren haben die erfindungsgemäßen Massen den Vorteil, dass sie bei der Lagerung nicht vergilben und somit auch hochwertige transparente Produkte hergestellt werden können.

Die erfindungsgemäßen vernetzbaren Massen haben den Vorteil, dass sie sich durch eine sehr hohe Lagerstabilität auszeichnen. In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Im Folgenden soll der Begriff Normklima 23°C ± 2°C und 50 % ± 5 % relative Luftfeuchtigkeit beim Druck der umgebenden Atmosphäre beinhalten (860 hPa bis 1060 hPa) und einer Luftgeschwingigkeit von kleiner gleich 1 m/s.

### Test 1:

### Bestimmung der Hautbildungszeit

Zur Bestimmung der Hautbildungszeit werden die in den Beispielen erhaltenen vernetzbaren Massen in einer 2 mm dicken Schicht auf PE-Folie aufgetragen und bei Normklima gelagert. Während des Aushärtens wird alle 5 min die Bildung einer Haut getestet. Dazu wird ein trockener und fettfreier Finger vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Test 2:

### Beurteilung der Gelbfärbung

Zur Beurteilung des Gelbfärbung werden die in den Beispielen erhaltenen vernetzbaren Massen in einer 6 mm dicken Schicht auf PE-Folie aufgetragen und bei Normklima gelagert. Nach sieben Tagen Lagerung in einem Raum mit Tageslicht durch Fensterglas wird das Vulkanisat von der PE-Folie entfernt und der b-Wert über weiß nach dem CIE-LAB-System mit einem Farbmeßgerät der Fa. datacolor international, USA vom Typ Microflash bestimmt. Der b-Wert ist der gemittelte Wert aus 5 Messpunkten und wird auf die nächstliegende ganze Zahl gerundet. Dabei bedeutet b=0 keine Farbe, b größer Null gelbe Farbe, je größer der b-Wert umso gelber erscheint das Vulkanisat. Ein b-Wert bis 5 ist mit dem Auge kaum wahrnehmbar und daher positv.

### Test 3:

### Beurteilung der Gelbfärbung nach UV-Lagerung

Zur Beurteilung der Gelbfärbung werden die in den Beispielen erhaltenen vernetzbaren Massen in einer 6 mm dicken Schicht auf PE-Folie aufgetragen und bei Normklima gelagert. Nach sieben Tagen Lagerung in einem Raum mit Tageslicht durch Fensterglas wird das erhaltene Vulkanisat 7 Tage einer Strahlung im Bereich von 290 bis 800 nm mit einer Beleuchtungsstärke von (550 ± 75) W/m² ausgesetzt. Die Strahlung wird durch eine Xenon-Bogenlampe erzeugt mit einem passendem Filter, sodass die Spektralverteilung die Anforderungen der ISO 4892-2 (Methode A) erfüllt. Anschließend wird das Vulkanisat von der PE-Folie entfernt und der b-Wert über weiß nach dem CIE-LAB-System mit einem Farbmessgerät der Fa. datacolor international, USA vom Typ Microflash bestimmt. Der b-Wert ist der gemittelte Wert aus 5 Messpunkten und wird auf die nächstliegende ganze Zahl gerundet. Dabei bedeutet b=0 keine Farbe, b größer Null gelbe Farbe, je größer der b-Wert umso gelber erscheint das Vulkanisat. Ein b-Wert bis 5 ist mit dem Auge kaum wahrnehmbar und daher positv.

### Test 4:

### Beurteilung der Haftung

Die zu prüfenden Untergründe werden von anhaftendem Schmutz gereinigt und mit einem geeignetem Lösungmittel entfettet. Zur Bestimmung der Haftung werden die in den Beispielen erhaltenen vernetzbaren Massen in einer 2 mm dicken Schicht auf die zu prüfenden Untergründe aufgetragen und sieben Tage bei Normklima gelagert. Zur Testung der Haftung wird ein etwa 1 cm langes Stück des Vulkanisats vom Untergrund abgeschabt und daran in Richtung des noch anhaftenen Gummis bis zum Versagen gezogen. Reißt der Gummi in sich, so ist die Haftung in Ordnung und wird mit 1 bewertet. Lässt sich der Gummi ohne Rückstand vom Untergrund abziehen, so ist die Haftung schlecht und wird mit 5 bewertet.

### Beispiel 1 (B1)

### Herstellung von Polymer 1

970 g eines monoolarmen Poly-(propylenglykol)-diols mit einem mittleren Molgewicht von 18 000 g/mol, einer OH-Zahl von 7,0 mg KOH/g, einer Molmassenverteilung Mw/Mn von 1,1 und einer Viskosität von 23 000 mPa·s (käuflich erhältlich bei Bayer MaterialScience AG, Deutschland unter der Bezeichnung "Acclaim Polyol 18200N"), 30 g 3-Isocyanatopropyl-trimethoxysilan und 0,1 g Bismutoctoat wurden 1 Stunde bei 90°C umgesetzt, anschließend wurde 1 g Methanol zugegeben, um Isocyanatreste abzufangen. Das Reaktionsprodukt wurde auf Raumtemperatur abgekühlt und unter Ausschluss von Feuchtigkeit gelagert.

Es wurde ein klares, farbloses Polymer erhalten, mit einer Viskosität von 35 000 mPa·s.

400 g des so hergestellten Polymers 1, 250 g eines Polypropylenglykol-monohydroxy-monobutylethers mit einer Viskosität bei 50°C von 240 mPa·s und einem Wassergehalt, bestimmt mittels Titration nach Karl-Fischer, von 120 ppm, 6,4 g N-(2-ethoxyphenyl)-N'-(4-isododecylphenyl)-ethylendiamin gelöst in 1,6 g Xylol (käuflich erhältlich unter der Bezeichnung SANDUVOR^{®} 3206 bei der Clariant, Deutschland) und 3 g eines HALS-Gemisches bestehend aus ca. 25% Methyl-1,2,2,6,6-pentamethyl-4-piperidylse-bacat und ca. 75% Bis(1,2,2,6,6-pentamethyl-4-piperidyl)sebacat (käuflich erhältlich unter der Bezeichnung TINUVIN^{®} 292 bei der Bodo Möller Chemie, Deutschland) werden in einem Planetenmischer miteinander gemischt und 5 Minuten bei ca. 100 mbar Absolutdruck gerührt. Anschließend werden 5 g N-((Dimethoxy)methylsilylmethyl)-O-methylcarbamat (käuflich erhältlich unter der Bezeichnung GENIOSIL^{®} XL 65 bei der Wacker Chemie AG, D-München) und 10 g Vinyltrimethoxysilan (käuflich erhältlich unter der Bezeichnung GENIOSIL^{®} XL 10 bei der Wacker Chemie AG, D-München) zugegeben und weitere 5 Minuten gerührt. Anschließend wird der Ansatz durch homogenes Einmischen von 80 g hydrophober pyrogener Kieselsäure mit einer spezifischen Oberfläche von 200 m²/g (käuflich erhältlich unter der Bezeichnung HDK^{®} H18 bei der Wacker Chemie AG, D-München), 100 g Polypropylenglykol-monohydroxy-monobutylether mit einer Viskosität bei 50°C von 240 mPa·s und einem Wassergehalt, bestimmt mittels Titration nach Karl-Fischer, von 120 ppm, 9,0 g 3-Aminopropyl-trimethoxysilan (käuflich erhältlich unter der Bezeichnung GENIOSIL^{®} GF 96 bei der Wacker Chemie AG, D-München) und 2,5 g Dioctylzinndilaurat (käuflich erhältlich unter der Bezeichnung WACKER^{®} Katalysator C39 bei der Wacker Chemie AG, D-München) vervollständigt. Zum Schluss wird die Mischung 5 Minuten bei ca. 100 mbar Absolutdruck gerührt, luftdicht in eine 310-ml-PE-Kartusche abgefüllt und gelagert.

Nach einem Tag Lagerung bei Raumtemperatur werden Test 1 bis 3 durchgeführt. Die Ergebnisse finden sich in Tabelle 1.

### Beispiel 2 (B2)

Die in Beispiel 1 beschriebene Verfahrensweise wurde wiederholt, mit der Abänderung, dass zusätzlich zu den 3 g eines HALS-Gemisches bestehend aus ca. 25% Methyl-1,2,2,6,6-pentamethyl-4-piperidylsebacat und ca. 75% Bis(1,2,2,6,6-pentamethyl-4-piperidyl)sebacat noch 3 g eines polymeren HALS mit der CAS-Nr. 192268-64-7 (käuflich erhältlich unter der Bezeichnung CHIMASSORB^{®} 2020 bei der Bodo Möller Chemie, Deutschland) gelöst in 5 g Dipropylenglykol-dimethylether eingesetzt wurden.

Nach einem Tag Lagerung bei Raumtemperatur werden Test 1 bis 3 durchgeführt. Die Ergebnisse finden sich in Tabelle 1.

### Beispiel 3 (B3)

Die in Beispiel 1 beschriebene Verfahrensweise wurde wiederholt, mit der Abänderung, dass anstelle von 6,4 g N-(2-ethoxyphenyl)-N'-(4-isododecylphenyl)-ethylendiamin gelöst in 1,6 g Xylol 6,0 g N-(2-Ethoxyphenyl)-N'-(2-ethylphenyl)-ethylendiamid (käuflich erhältlich unter der Bezeichnung TINUVIN^{®} 312 bei der Bodo Möller Chemie, Deutschland) gelöst in 24 g 1-Methyl-2-pyrrolidon eingesetzt wurden.

Nach einem Tag Lagerung bei Raumtemperatur werden Test 1 bis 3 durchgeführt. Die Ergebnisse finden sich in Tabelle 1.

### Beispiel 4 (B4)

Die in Beispiel 1 beschriebene Verfahrensweise wurde wiederholt, mit der Abänderung, dass anstelle von 6,4 g N-(2-ethoxyphenyl)-N'-(4-isododecylphenyl)-ethylendiamin gelöst in 1,6 g Xylol eine Dispersion von 6,0 g N-(2-Ethoxyphenyl)-N'-(2-ethylphenyl)-ethylendiamid (käuflich erhältlich unter der Bezeichnung TINUVIN^{®} 312 bei der Bodo Möller Chemie, Deutschland) in 24 g Polypropylenglykol-monohydroxy-monobutylether mit einer Viskosität bei 50°C von 240 mPa·s und einem Wassergehalt, bestimmt mittels Titration nach Karl-Fischer, von 120 ppm, die 10 min in einem Mischer der Fa. Hauschild aus Hamm in Deutschland vom Typ AM 501 bei 2200 UPM mit 30 g Edelstahlkugel mit einem Durchmesser von 2,0 mm dispergiert wird, eingesetzt wurde, wobei die Dispersion eine Kornfeinheit von unter 30 µm aufwies.

Nach einem Tag Lagerung bei Raumtemperatur werden Test 1 bis 3 durchgeführt. Die Ergebnisse finden sich in Tabelle 1.

### Vergleichsbeispiel 1 (V1)

Die in Beispiel 1 beschriebene Verfahrensweise wurde wiederholt, mit der Abänderung, dass anstelle von 6,4 g N-(2-ethoxyphenyl)-N'-(4-isododecylphenyl)-ethylendiamin gelöst in 1,6 g Xylol 6,0 g eines flüssigen UV-Absorbers vom Hydroxyphenyltriazin-Typ mit der CAS 153519-44-9 (käuflich erhältlich unter der Bezeichnung TINUVIN^{®} 400 bei der Bodo Möller Chemie, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 2 (V2)

Die in Beispiel 1 beschriebene Verfahrensweise wurde wiederholt, mit der Abänderung, dass anstelle von 6,4 g N-(2-ethoxyphenyl)-N'-(4-isododecylphenyl)-ethylendiamin gelöst in 1,6 g Xylol 6,0 g eines UV-Absorbers vom Benzotriazoltyp mit der EG-Nummer 401-680-5 (käuflich erhältlich unter der Bezeichnung TINUVIN^{®} 571 bei der Bodo Möller Chemie, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 3 (V3)

Die in Beispiel 1 beschriebene Verfahrensweise wurde wiederholt, mit der Abänderung, dass anstelle von 6,4 g N-(2-ethoxyphenyl)-N'-(4-isododecylphenyl)-ethylendiamin gelöst in 1,6 g Xylol 6,0 g 2-(Ethylhexyl)-2-Cyano-3,3-diphenylacrylat vom Cyanoacrylattyp mit der CAS-Nummer 6197-30-4 (käuflich erhältlich unter der Bezeichnung UVZNUL^{®} 3039C bei der BASF AG, Deutschland) eingesetzt wurden.

Nach einem Tag Lagerung bei Raumtemperatur werden Test 1 bis 3 durchgeführt. Die Ergebnisse finden sich in Tabelle 1.

**Tabelle 1**

| Beispiele | Test 1 [min] | Test 2 (b-Wert) | Test 3 (b-Wert nach UV-Lagerung) |
|---|---|---|---|
| B1 | 45 | 4 | 3 |
| B2 | 45 | 5 | 5 |
| B3 | 45 | 2 | 3 |
| B4 | 30 | 3 | 3 |
| V1 | 30 | 6 | 7 |
| V2 | 45 | 7 | 10 |
| V3 | 45 | 13 | nicht messbar, da Vulkanisat zu klebrig |

Die Ergebnisse von Tabelle 1 zeigen, dass mit Oxaldianiliden der Formel (II) härtbare Massen hergestellt werden können, welche keine sichtbaren Vergilbungen aufweisen.

### Beispiel 5 (B5)

225 g des Polymers 1, dessen Herstellung oben unter Beispiel 1 beschrieben ist, 20 g eines Pulver mit einer Teilchengröße unter 32 µm und einem Wassergehalt von unter 0,01 g/l auf Basis von hydriertem Rizinusöl, 6,4 g N-(2-ethoxyphenyl)-N'-(4-isodo-decylphenyl)-ethylendiamin gelöst in 1,6 g Xylol (käuflich erhältlich unter der Bezeichnung SANDUVOR^{®} 3206 bei der Clariant, Deutschland), 3 g eines HALS-Gemisches bestehend aus ca. 25% Methyl-1,2,2,6,6-pentamethyl-4-piperidylsebacat und ca. 75% Bis(1,2,2,6,6-pentamethyl-4-piperidyl)sebacat (käuflich erhältlich unter der Bezeichnung TINUVIN^{®} 292 bei der Bodo Möller Chemie, Deutschland), 105 g eines gemahlenen mit Stearinsäure behandeltem Calziumcarbonates mit einem mittleren Teilchendurchmesser (D50%) von 5,7 µm (käuflich erhältlich unter der Bezeichnung OMYA BLR3 bei der OMYA GmbH, Deutschland) und 105 g eines gefällten mit Stearinsäure behandelten Calziumcarbonates mit einem mittlerem Teilchendurchmesser (D50%) von 80 nm (käuflich erhältlich unter der Bezeichnung Hakuenka CCR bei der Shiraishi Kogyo Kaisha, Ltd., Japan) werden in einem Planetenmischer miteinander gemischt und 15 Minuten bei ca. 100 mbar Absolutdruck und so hoher Drehzahl gerührt, dass eine Produkttemperatur von ca. 50°C erreicht wird. Anschließend werden 360 g Polypropylenglykol-monohydroxy-monobutylethers mit einer Viskosität bei 50°C von 240 mPa·s und einem Wassergehalt, bestimmt mittels Titration nach Karl-Fischer, von 120 ppm, 5 g (Methacryloxymethyl)methyldimethoxysilan (käuflich erhältlich unter der Bezeichnung GENIOSIL^{®} XL 32 bei der Wacker Chemie AG, D-München) und 12,5 g Vinyltrimethoxysilan (käuflich erhältlich unter der Bezeichnung GENIOSIL^{®} XL 10 bei der Wacker Chemie AG, D-München) zugegeben und weitere 5 Minuten gerührt. Anschließend wird der Ansatz durch homogenes Einmischen von 42 g hydrophober pyrogener Kieselsäure mit einer spezifischen Oberfläche von 200 m²/g (käuflich erhältlich unter der Bezeichnung HDK^{®} H18 bei der Wacker Chemie AG, D-München), 5,0 g 3-Aminopropyl-trimethoxysilan (käuflich erhältlich unter der Bezeichnung GENIOSIL^{®} GF 96 bei der Wacker Chemie AG, D-München) und 2,5 g Dioctylzinndilaurat (käuflich erhältlich unter der Bezeichnung WACKER^{®} Katalysator C39 bei der Wacker Chemie AG, D-München) vervollständigt. Zum Schluss wird die Mischung 5 Minuten bei ca. 100 mbar Absolutdruck gerührt, luftdicht abgefüllt und gelagert.

Nach einem Tag Lagerung bei Raumtemperatur werden Test 1 und 4 durchgeführt. Die Ergebnisse finden sich in Tabelle 2.

### Beispiel 6 (B6)

Die in Beispiel 5 beschriebene Verfahrensweise wurde wiederholt, mit der Abänderung, dass anstelle von 5,0 g 3-Aminopropyl-trimethoxysilan 13,0 g 3-Aminopropyl-trimethoxysilan eingesetzt wurden.

Nach einem Tag Lagerung bei Raumtemperatur werden Test 1 und 4 durchgeführt. Die Ergebnisse finden sich in Tabelle 2.

### Beispiel 7 (B7)

Die in Beispiel 6 beschriebene Verfahrensweise wurde wiederholt, mit der Abänderung, dass zusätzlich zum 3-Aminopropyl-trimethoxysilan noch 5,0 g 3-Glycidoxypropyl-trimethoxysilan eingesetzt wurden.

Nach einem Tag Lagerung bei Raumtemperatur werden Test 1 und 4 durchgeführt. Die Ergebnisse finden sich in Tabelle 2.

### Beispiel 8 (B8)

Die in Beispiel 5 beschriebene Verfahrensweise wurde wiederholt, mit der Abänderung, dass anstelle von 5,0 g 3-Aminopropyl-trimethoxysilan 5,0 g N-(2-Aminoethyl)-3-aminopropyl-trimethoxysilan (käuflich erhältlich unter der Bezeichnung GENIOSIL^{®} GF 91 bei der Wacker Chemie AG, D-München) eingesetzt wurden.

Nach einem Tag Lagerung bei Raumtemperatur werden Test 1 und 4 durchgeführt. Die Ergebnisse finden sich in Tabelle 2.

### Beispiel 9 (B9)

Die in Beispiel 8 beschriebene Verfahrensweise wurde wiederholt, mit der Abänderung, dass anstelle von 5,0 g 3-Aminopropyl-trimethoxysilan 10,0 g N-(2-Aminoethyl)-3-aminopropyl-trimethoxysilan eingesetzt wurden.

Nach einem Tag Lagerung bei Raumtemperatur werden Test 1 und 4 durchgeführt. Die Ergebnisse finden sich in Tabelle 2.

### Vergleichsbeispiel 4 (V4)

Die in Beispiel 5 beschriebene Verfahrensweise wurde wiederholt, mit der Abänderung, dass anstelle von 5,0 g 3-Aminopropyl-trimethoxysilan 5,0 g 3-(Dibutylamino)-1-propylamin (käuflich erhältlich bei der Sigma-Aldrich Corporation, USA) eingesetzt wurden.

Nach einem Tag Lagerung bei Raumtemperatur werden Test 1 und 4 durchgeführt. Die Ergebnisse finden sich in Tabelle 2.

### Vergleichsbeispiel 5 (V5)

Die in Beispiel 5 beschriebene Verfahrensweise wurde wiederholt, mit der Abänderung, dass anstelle von 3-Aminopropyl-trimethoxysilan 1,0 g 1,5,7-Triazabicyclo[4.4.0]dec-5-en (käuflich erhältlich unter der Bezeichnung TBD bei der Sigma-Aldrich Corporation, USA) gelöst in 1,0 g Methanol p.A. eingesetzt wurden.

Nach einem Tag Lagerung bei Raumtemperatur werden Test 1 und 4 durchgeführt. Die Ergebnisse finden sich in Tabelle 2.

**Tabelle 2**

| **Beispiel** | **Test 1 [min]** | **Test 4 (Haftung)** | | | |
|---|---|---|---|---|---|
| | | Glas | Aluminium, eloxiert | Polyamid | Edelstahl |
| **B5** | 60 | 1 | 1 | 1 | 1 |
| **B6** | 30 | 1 | 1 | 1 | 1 |
| **B7** | 25 | 1 | 1 | 1 | 1 |
| **B8** | 70 | 1 | 1 | 1 | 1 |
| **B9** | 60 | 1 | 1 | 1 | 1 |
| **V4** | 100 | 1 | 5 | 5 | 5 |
| **V5** | 250 | 1 | 5 | 5 | 5 |

Die Ergebnisse in Tabelle 2 zeigen, dass ein aminofunktionelles Silan notwendig ist, um gute Haftung und hinreichende Aushärtungsgeschwindigkeit zu erreichen.

## Patentansprüche

1. Vernetzbare Massen enthaltend
(A) Verbindungen der Formel
A- [(CR¹₂)_{b}-SiRₐ(OR²)₃₋ₐ]ₓ (I),
wobei
A einen x-wertigen, über Stickstoff, Phosphor, Sauerstoff, Schwefel, Kohlenstoff oder Carbonylgruppe gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und ein Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und ein Wasserstoffatom oder einen einwertigen, gegebenenfalls substituierten Kohlenwasserstoffrest darstellt,
x eine ganze Zahl von 1 bis 10 ist,
a 0, 1 oder 2 ist und
b eine ganze Zahl von 1 bis 10 ist,
(B) basischen Stickstoff aufweisende Organosiliciumverbindung
und
(C) Oxaldianilid der Formel
R'-NH-C (=O) -C (=O) -NH-R³ (II),
wobei
R³ gleich oder verschieden sein kann und einen einwertigen, gegebenenfalls substituierten Phenylrest darstellt.

2. Vernetzbare Massen gemäß Anspruch 1, **dadurch gekennzeichnet, dass** es sich bei Rest A um Polyoxyalkylen- und Polyacrylatreste handelt, die über -O-C(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- oder -O-CH₂-C(OH)H-CH₂-O- an die Gruppe - [(CR¹₂)_{b}-SiRₐ(OR²)₃₋ₐ] gebunden sind, wobei R' gleich oder verschieden sein kann und Wasserstoffatom oder einen einwertigen, gegebenenfalls substituierten Kohlenwasserstoffrest darstellt.

3. Vernetzbare Massen gemäß Anspruch 1 oder 2, **dadurch gekennzeichnet, dass** es sich bei Rest A um Polyoxyalkylenreste handelt, die über -O-C(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- oder -O-CH₂-C(OH)H-CH₂-O- an die Gruppe - [(CR¹₂)_{b}-SiRₐ (OR²) ₃₋ₐ] gebunden sind, wobei R' gleich oder verschieden sein kann und Wasserstoffatom oder einen einwertigen, gegebenenfalls substituierten Kohlenwasserstoffrest darstellt.

4. Vernetzbare Massen gemäß einem oder mehreren der Ansprüche 1 bis 3, **dadurch gekennzeichnet, dass** die Reste A Einheiten der Formel
-NR¹⁰ -C (=O)- (V)
enthalten, wobei
R¹⁰ gleich oder verschieden sein kann und Wasserstoffatom oder gegebenenfalls substituierten, einwertigen Kohlenwasserstoffrest bedeutet.

5. Vernetzbare Massen gemäß einem oder mehreren der Ansprüche 1 bis 4, **dadurch gekennzeichnet, dass** es sich bei Komponente (B) um Organosiliciumverbindungen enthaltend Einheiten der Formel
R¹²ₖDₗSi (OR¹³)ₘO_{(4-k-l-m)/2} (VI),
handelt, worin
R¹² gleich oder verschieden sein kann und einen einwertigen, gegebenenfalls substituierten SiC-gebundenen, von basischem Stickstoff freien organischen Rest bedeutet,
R¹³ gleich oder verschieden sein kann und Wasserstoffatom oder gegebenenfalls substituierte Kohlenwasserstoffreste bedeutet,
D gleich oder verschieden sein kann und einen einwertigen, Sigebundenen Rest mit basischem Stickstoff bedeutet,
k 0, 1, 2, oder 3 ist,
l 0, 1, 2, 3 oder 4 ist und
m 0, 1, 2 oder 3 ist,
mit der Maßgabe, dass die Summe aus k+l+m kleiner oder gleich 4 ist und pro Molekül mindestens ein Rest D anwesend ist.

6. Vernetzbare Massen gemäß einem oder mehreren der Ansprüche 1 bis 5, **dadurch gekennzeichnet, dass** sie Komponente (B) in Mengen von 0,001 bis 10 Gewichtsteilen, bezogen auf 100 Gewichtsteile Komponente (A), enthalten.

7. Vernetzbare Massen gemäß einem oder mehreren der Ansprüche 1 bis 6, **dadurch gekennzeichnet, dass** es sich bei Rest R³ um Phenyl-, Alkylphenyl-, Alkoxyphenyl- oder Alkyl(Alkoxy)phenylreste handelt, wobei sich die Alkyl- und Alkoxygruppen in beliebiger Stellung am Phenylring befinden können.

8. Vernetzbare Massen gemäß einem oder mehreren der Ansprüche 1 bis 7, **dadurch gekennzeichnet, dass** sie Komponente (C) in Mengen von 0,01 bis 10 Gewichtsteilen, bezogen auf 100 Gewichtsteile Komponente (A), enthalten.

9. Vernetzbare Massen gemäß einem oder mehreren der Ansprüche 1 bis 8, **dadurch gekennzeichnet, dass** es sich um solche handelt herstellbar unter Verwendung von
(A) Verbindungen der Formel (I),
(B) basischen Stickstoff enthaltende Organosiliciumverbindungen enthaltend Einheiten der Formel (VI),
(C) Oxaldianilide der Formel (II),
(D) Vernetzer,
gegebenenfalls
(E) Weichmacher,
gegebenenfalls
(F) Füllstoffe,
gegebenenfalls
(G) Haftvermittler,
gegebenenfalls
(H) organische Lösungsmittel,
gegebenenfalls
(K) Katalysatoren und
gegebenenfalls
(L) Additive.

10. Formkörper, hergestellt durch Vernetzung der Massen gemäß einem oder mehreren der Ansprüche 1 bis 9.

## Claims

1. Crosslinkable materials containing
(A) compounds of the formula
A- [(CR¹₂)_{b}-SiRₐ(OR²)₃₋ₐ]ₓ (I),
in which
A is an x-valent polymer radical bonded via nitrogen, phosphorus, oxygen, sulfur, carbon or a carbonyl group, R may be identical or different and is a monovalent, optionally substituted hydrocarbon radical,
R¹ may be identical or different and is a hydrogen atom or a monovalent, optionally substituted hydrocarbon radical which may be linked to the carbon atom via nitrogen, phosphorus, oxygen, sulfur or a carbonyl group,
R² may be identical or different and is a hydrogen atom or a monovalent, optionally substituted hydrocarbon radical,
x is an integer from 1 to 10,
a is 0, 1 or 2 and
b is an integer from 1 to 10,
(B) an organosilicon compound having basic nitrogen and
(C) oxaldianilide of the formula
R³-NH-C(=O)-C(=O) -NH-R³ (II),
in which
R³ may be identical or different and is a monovalent, optionally substituted phenyl radical.

2. Crosslinkable materials according to Claim 1, **characterized in that** radicals A are polyoxyalkylene and polyacrylate radicals which are bonded via -O-C(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- or -O-CH₂-C (OH) H-CH₂-O- to the group - [(CR¹₂) _{b}-SiRₐ (OR²)₃₋ₐ] , in which R' may be identical or different and is a hydrogen atom or a monovalent, optionally substituted hydrocarbon radical.

3. Crosslinkable materials according to Claim 1 or 2, **characterized in that** radicals A are polyoxyalkylene radicals which are bonded via -O-C(=O)-NH-, -C(=O)-O-, -O-C(=O)-O-, -O- -O-CH₂-C(OH)H-CH₂-NR'-, -O-CH₂-C(OH)H-CH₂-S-, -O-CH₂-C(OH)H-CH₂-C(=O)- or -O-CH₂-C(OH)H-CH₂-O- to the group - [(CR¹₂)_{b}-SiRₐ(OR²)₃₋ₐ] , in which R' may be identical or different and is a hydrogen atom or a monovalent, optionally substituted hydrocarbon radical.

4. Crosslinkable materials according to one or more of Claims 1 to 3, **characterized in that** the radicals A contain units of the formula
-NR¹⁰-C(=O)- (V)
in which
R¹⁰ may be identical or different and is a hydrogen atom or an optionally substituted, monovalent hydrocarbon radical.

5. Crosslinkable materials according to one or more of Claims 1 to 4, **characterized in that** component (B) is an organosilicon compound containing units of the formula
R¹²ₖDₗSi (OR¹³)ₘO_{(4-k-l-m)/2} (VI),
in which
R¹² may be identical or different and is a monovalent, optionally substituted SiC-bonded organic radical free of basic nitrogen,
R¹³ may be identical or different and is a hydrogen atom or optionally substituted hydrocarbon radicals,
D may be identical or different and is a monovalent, Si-bonded radical having basic nitrogen,
k is 0, 1, 2 or 3,
1 is 0, 1, 2, 3 or 4 and
m is 0, 1, 2 or 3,
with the proviso that the sum k+l+m is less than or equal to 4 and at least one radical D is present per molecule.

6. Crosslinkable materials according to one or more of Claims 1 to 5, **characterized in that** component (B) is present in amounts of from 0.001 to 10 parts by weight, based on 100 parts by weight of component (A).

7. Crosslinkable materials according to one or more of Claims 1 to 6, **characterized in that** radicals R³ are phenyl, alkylphenyl, alkoxyphenyl or alkyl(alkoxy)phenyl radicals, it being possible for the alkyl and alkoxy groups to be present in any position on the phenyl ring.

8. Crosslinkable materials according to one or more of Claims 1 to 7, **characterized in that** component (C) is present in amounts of from 0.01 to 10 parts by weight, based on 100 parts by weight of component (A).

9. Crosslinkable materials according to one or more of Claims 1 to 8, **characterized in that** the materials are those which can be prepared using
(A) compounds of the formula (I),
(B) organosilicon compounds containing basic nitrogen and containing units of the formula (VI),
(C) oxaldianilides of the formula (II),
(D) crosslinking agents,
optionally
(E) plasticizers,
optionally
(F) fillers,
optionally
(G) adhesion promoters,
optionally
(H) organic solvents,
optionally
(K) catalysts and
optionally
(L) additives.

10. Molding produced by crosslinking the materials according to one or more of Claims 1 to 9.

## Revendications

1. Masses réticulables contenant
(A) des composés de formule
A- [(CR¹₂)_{b}-SiRₐ(OR²)₃₋ₐ]ₓ (I),
où
A signifie un radical polymère x-valent, lié par azote, phosphore, oxygène, soufre, carbone ou un groupe carbonyle,
R peut être identique ou différent et représente un radical hydrocarboné monovalent, le cas échéant substitué,
R¹ peut être identique ou différent et représente un atome d'hydrogène ou un radical hydrocarboné monovalent, le cas échéant substitué, qui peut être lié à l'atome de carbone par azote, phosphore, oxygène, soufre ou un groupe carbonyle,
R² peut être identique ou différent et représente un atome d'hydrogène ou un radical hydrocarboné monovalent, le cas échéant substitué,
x vaut un nombre entier de 1 à 10,
a vaut 0, 1 ou 2 et
b vaut un nombre entier de 1 à 10,
(B) un composé organosilicié présentant de l'azote basique et
(C) un oxaldianilide de formule
R³-NH-C(=O)-C(=O) -NH-R³ (II),
où
R³ peut être identique ou différent et représente un radical phényle monovalent, le cas échéant substitué.

2. Masses réticulables selon la revendication 1, **caractérisées en ce qu'**il s'agit pour le radical A de radicaux polyoxyalkylène et polyacrylate, qui sont liés par -O-C(=O)-NH-, -C(=O)-O-, -O-C(=O)-O-, -O-, -O-CH₂-C(OH)H-CH₂-NR'-, -O-CH₂-C(OH)H-CH2-S-, -O-CH₂-C(OH)H-CH₂-C(=O)- ou -O-CH₂-C (OH) H-CH₂-O- au groupe - [(CR¹₂)_{b}-SiRₐ(OR²)₃₋ₐ], R' pouvant être identique ou différent et représentant un atome d'hydrogène ou un radical hydrocarboné monovalent, le cas échéant substitué.

3. Masses réticulables selon la revendication 1 ou 2, **caractérisées en ce qu'**il s'agit pour le radical A de radicaux polyoxyalkylène, qui sont liés par -OC(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- ou -O-CH₂-C(OH)H-CH₂-O- au groupe - -[(CR¹₂)_{b}-SiRₐ(OR²)₃₋ₐ], R' pouvant être identique ou différent et représentant un atome d'hydrogène ou un radical hydrocarboné monovalent, le cas échéant substitué.

4. Masses réticulables selon l'une ou plusieurs des revendications 1 à 3, **caractérisées en ce que** les radicaux A contiennent des unités de formule
-NR¹⁰-C (=O) - (V)
où
R¹⁰ peut être identique ou différent et signifie un atome d'hydrogène ou un radical hydrocarboné monovalent, le cas échéant substitué.

5. Masses réticulables selon l'une ou plusieurs des revendications 1 à 4, **caractérisées en ce qu'**il s'agit, pour le composant (B), de composés organosiliciés contenant des unités de formule
R¹²ₖDₗSi (OR¹³)ₘO_{(4-k-l-m)/2} (VI),
où R¹² peut être identique ou différent et signifie un radical organique monovalent, le cas échéant substitué, lié par SiC, exempt d'azote basique,
R¹³ peut être identique ou différent et signifie un atome d'hydrogène ou des radicaux hydrocarbonés le cas échéant substitués,
D peut être identique ou différent et signifie un radical monovalent lié par Si, contenant de l'azote basique,
k vaut 0, 1, 2 ou 3,
l vaut 0, 1, 2, 3 ou 4 et
m vaut 0, 1, 2 ou 3,
à condition que la somme de k + 1 + m soit inférieure ou égale à 4 et qu'il existe au moins un radical D par molécule.

6. Masses réticulables selon l'une ou plusieurs des revendications 1 à 5, **caractérisées en ce qu'**elles contiennent le composant (B) en des quantités de 0,001 à 10 parties en poids, par rapport à 100 parties en poids de composant (A).

7. Masses réticulables selon l'une ou plusieurs des revendications 1 à 6, **caractérisées en ce qu'**il s'agit pour le radical R³ de radicaux phényle, alkylphényle, alcoxyphényle ou alkyl(alcoxy)phényle, les groupes alkyle et alcoxy pouvant se trouver en une position quelconque sur le cycle phényle.

8. Masses réticulables selon l'une ou plusieurs des revendications 1 à 7, **caractérisées en ce qu'**elles contiennent le composant (C) en des quantités de 0,01 à 10 parties en poids, par rapport à 100 parties en poids de composant (A).

9. Masses réticulables selon l'une ou plusieurs des revendications 1 à 8, **caractérisées en ce qu'**il s'agit de masses pouvant être préparées avec utilisation
(A) de composés de formule (I),
(B) de composés organosiliciés contenant de l'azote basique et contenant des unités de formule (VI),
(C) d'oxaldianilides de formule (II),
(D) de réticulants, le cas échéant
(E) de plastifiants, le cas échéant
(F) de charges, le cas échéant
(G) de promoteurs d'adhérence, le cas échéant
(H) de solvants organiques, le cas échéant
(K) de catalyseurs et le cas échéant
(L) d'additifs.

10. Corps façonnés, préparés par réticulation des masses selon l'une ou plusieurs des revendications 1 à 9.
